# EUROPEAN PATENT APPLICATION

(11) **EP 3 441 145 A1**
(43) Date of publication of application: **13.02.2019**
(21) Application number: 16897882.3
(22) Date of filing: 06.04.2016
(51) Int. Cl.: B04B 1/08, B01D 45/14, F01M 13/04

(54) **OIL SEPARATOR**

(71) Applicant: Tokyo Roki Co., Ltd., Yokohama-shi Kanagawa 224-0041 (JP)
(72) Inventor: ISHIDA, Kosaku, Yokohama-shi Kanagawa 224-0041 (JP)
(74) Representative: Osha Liang
(86) International application number: PCT/JP2016/061208
(87) International publication number: WO 2017/175323

(57) **Abstract**

In the present invention, a case 22 houses a separation chamber 43 including a rotor 60, and on an inner peripheral surface 22f of the case 22, a plurality of convex portion 22g are provided arranged adjacently in a direction along the inner peripheral surface 22f, and extending in the up-down direction. Accordingly, between the adjacent convex portions 22g and 22g, grooves 22h extending in the up-down direction can be provided. These grooves 22h captures oil that has been separated by rotation of the rotor 60, and guide the captured oil so that the oil drops downward along the grooves 22h in an internal space due to capillary action without being affected by a swirl flow caused by rotation of the rotor 60; the internal space houses a separation chamber 43. Accordignly, the separated oil can be prevented from formuing oil films on the inner peripheral surface 22f of the case 22 which houses a separation chamber 43, and from being carried away by the swirl flow that is caused by rotation of the rotor 60.

## Description

### [Technical Field]

The present invention relates to an oil separator that separates mist oil contained in processing-target gas from the gas.

### [Background Art]

There is known an oil separator which separates, from processing-target gas, mist oil contained in the processing-target gas (see PTL 1, for example). The following will describe an oil separator described in PTL 1 using reference signs of PTL 1 with blankets. Note that, concerning the names of components, commonly known ones are used, and thus the names are not always same as those in PTL 1.

A cylindrical upper housing (2) is disposed above a cylindrical lower casing (1). The hollow of the upper housing (2) is closed from above by an end wall (3), and the hollow of the upper housing (2) is closed from below by a partition (5). Inside the upper housing (2), a gas cleaning device (13) for cleaning gas is disposed, and inside the lower casing (1), a centrifugal rotor (11) for cleaning liquid is disposed.

The gas cleaning device (13) is a centrifugal oil separator, and the rotor of the gas cleaning device (13) is composed of a plurality of stacked separation disks (37). Every separation disk (37) is interposed between a plate-like upper holder (36) and a lower holder (35); thus, the separation disks are held by these holders (35, 36). The separation disks (37), the upper holder (36) and the lower holder (35) rotate together with the centrifugal rotor (11) using hydraulic pressure of the centrifugal rotor (11). There is an opening formed at the center of each separation disk (37). The openings of the separation disks (37) are stacked vertically, forming an inlet chamber (39) at the center of the stack of the separation disks (37). The lower holder (35) has holes (38) formed above the opening (8) of the partition (5) .

Blow-by gas (processing-target gas) from a crankcase is flowing from the lower casing (1) through the opening (8) of the partition (5) and the holes (38) of the lower holder (35) into the inlet chamber (39). While the blow-by gas is flowing radially outward in clearances between the separation disks (37), mist oil contained in blow-by gas is captured by the clearances between the separation disks (37). Blow-by gas blown out from the outer edge of the separation disks (37) moves upward in the upper housing (2) and is discharged. Oil captured by the clearances between the separation disks (37) is blown toward the inner peripheral surface of the upper housing (2) due to the centrifugal force of the separation disks (37). Oil attached to the inner peripheral surface flows down along the inner peripheral surface. Thus, the processing-target gas and the mist oil contained therein are separated and cleaned.

### [Citation List]

### [Patent Literature]

[PTL 1] Japanese Unexamined Patent Application Publication (Translation of PCT Application) No. 2005-515065

### [Summary of Invention]

### [Technical Problem]

In a type of centrifugal oil separator which makes use of the rotation of a rotor constituted by separation disks as described in PTL 1, oil discharged from the separation disks is discharged downward draining along an inner wall of the case (the inner peripheral surface of the upper housing (2)). But, in the case (the upper housing (2)), a swirl flow by the rotor that is rotating at a high speed is generated and is blowing in a direction of an discharge exit while gradually going toward an air hole located above. Accordingly, there is a problem that, if oil films are formed on the inner wall of the case, pushing of the oil films by a swirl flow moves oil in a direction of a discharge exit, finally flowing the oil out of the discharge exit (in other words, oil that forms oil films on the inner wall of the case is carried away by the swirl flow).

The present invention has been made in consideration of such circumstances. An object of the present invention is to prevent the separated oil from forming oil films on an inner wall surface of a case which houses a separation chamber, and to prevent the oil from being carried away by a swirl flow that is caused by the rotation of the rotor.

### [Solution to Problem]

To achieve the above-described object, an oil separator according to the present invention is an oil separator including:
a rotor having an inner peripheral space and configured to be rotated by introducing, into the inner peripheral space, separating oil and processing-target gas containing mist oil so that the mist oil is separated from the processing-target gas; and
a case having an internal space and an inlet hole communicating with the internal space, the internal space housing a separation chamber having the rotor, the case including a plurality of convex portions on an inner wall surface which constitutes the internal space, the plurality of convex portions arranged adjacently in a direction along the inner wall surface, and extending in an up-down direction.

According to the invention, on the inner wall surface of the case, the plurality of convex portion are provided arranged adjacently in a direction along the inner wall surface, and extending in the up-down direction. Thus, between the adjacent convex portions, grooves extending in the up-down direction can be provided. These grooves capture oil that has been separated by rotation of the rotor, and guide the captured oil so that the oil drops downward along the grooves in an internal space due to capillary action without being affected by a swirl flow (wind) caused by rotation of the rotor; the internal space houses a separation chamber. This configuration can prevent that the separated oil forms oil films on the inner wall surface of a case, and can prevent oil from being carried away by a swirl flow that is caused by rotation of the rotor.

In such an oil separator,
the case further includes a guide portion extending on the inner wall surface in the up-down direction, and
the guide portion guides, downward in the internal space, oil which has been separated by rotation of the rotor.

Accordingly, the guide portion promotes downward movement of separated oil on the inner wall surface, facilitating discharge of the oil from the internal space. This makes it possible to reduce the amount of oil which is captured by grooves between the plurality of convex portions formed on the inner wall surface of the case, and also makes it possible to effectively prevent formation of oil films on the inner peripheral surface. Even if a large amount of oil temporarily flows into the internal space that houses the separation chamber, it is possible for that oil to continuously move (flow) downward by the guide portion, making it possible to effectively discharge the oil.

Further, in such an oil separator, the case includes:
a first groove constituted by the plurality of convex portions formed on the inner wall surface; and
a second groove constituted by the guide portion formed on the inner wall surface, and formed deeper than the first groove.

Accordingly, the second groove constituted by the guide portion makes it possible to move downward a larger amount of oil than by the first groove constituted by a plurality of convex portion, facilitating discharge of the oil from the internal space. This makes it possible to promote the reduction of the amount of oil which is captured by the first groove formed on the inner wall surface of the case, and also makes it possible to more effectively prevent formation of oil films on the inner wall surface.

Furthermore, in such an oil separator, the the plurality of convex portions are formed in a portion of the inner wall surface other than a lower end portion of the inner wall surface in the up-down direction.

In the lower end portion of the inner wall surface of the case, it is less likely to be affected by a swirl flow caused by rotation of the rotor than in other portions of the inner wall surface, and therefore oil is easier to drop downward. Accordingly, the process for forming the plurality of convex portions can be simplified by forming, in the up-down direction, the plurality of convex portions in the portion which is included in the inner wall surface and which is not the lower end portion of the inner wall surface.

### [Advantageous Effects of Invention]

According to the invention, that separated oil can be prevented from forming oil films on an inner wall surface of a case which houses a separation chamber, and the oil can prevented from being carried away by a swirl flow that is caused by the rotation of the rotor.

### [Brief Description of Drawings]

FIG. 1 is a schematic diagram illustrating a closed crankcase ventilation system.
FIG. 2 is a perspective view viewing an oil separator from a right side, an upper side, and a rear side.
FIG. 3 is a plan view of the oil separator.
FIG. 4 is an exploded perspective view of the oil separator.
FIG. 5 is a cross-sectional view illustrating a surface taken along line V-V illustrated in FIG. 3 viewed in an arrow direction.
FIG. 6 is a cross-sectional view illustrating a surface taken along line VI-VI illustrated in FIG. 3 viewed in an arrow direction.
FIG. 7 is an enlarged view of an upper side of FIG. 6.
FIG. 8 is an enlarged view of a lower side of FIG. 6.
FIG. 9 is an enlarged view of a middle portion of FIG. 6.
FIG. 10 is an enlarged perspective view illustrating the oil separator cut along the V-V cross-sectional surface illustrated in FIG. 3 viewed from front above and right.
FIG. 11 is a perspective view illustrating the oil separator cut along the VI-VI cross-sectional surface illustrated in FIG. 3 viewed from rear, below and left.
FIG. 12 is a perspective view illustrating the oil separator cut along the VI-VI cross-sectional surface illustrated in FIG. 3 viewed from rear, below and left.
FIG. 13 is a perspective view illustrating the oil separator cut along the VI-VI cross-sectional surface illustrated in FIG. 3 viewed from rear, below and left.
FIG. 14 is an enlarged perspective view illustrating a lower partition wall member viewed from above.
FIG. 15 is an enlarged perspective view illustrating the lower partition wall member viewed from below.
FIG. 16 is an enlarged cross-sectional view illustrating a first partition wall of the lower partition wall member from a right side, with the oil separator being cut along the VI-VI cross-section surface shown in FIG. 3.
FIG. 17 is diagram illustrating a flow of oil on the inner wall surface of a case, and is a perspective view of the upper case of an oil separator according to the present invention viewed from below and right.
FIG. 18 is a diagram illustrating a flow of oil on the inner wall surface of the case, and is a perspective view of the upper case of a conventional oil separator viewed from below and right.
FIG. 19 is an enlarged view of the portion C shown in FIG. 14.
FIG. 20A is a bottom view of the upper case. FIG. 20B is an enlarged view of the portion D shown in FIG. 17.
FIG. 21 is an enlarged perspective view of the lower partition wall member according to another embodiment viewed from above.
FIG. 22 is an enlarged perspective view of the lower partition wall member according to another embodiment viewed from below.
FIG. 23 is a cross-sectional view of the lower partition wall member according to another embodiment, taken along the VI-VI cross-section surface shown in FIG. 3.
FIG. 24 is an enlarged cross-sectional view of a lower part of an oil separator according to another embodiment, taken along VI-VI cross-section surface shown in FIG. 3.

### [Description of Embodiments]

The following describe embodiments of the present invention with reference to the drawings. The embodiments described later include various limitations technically preferable to embody the present invention. However, the scope of the present invention is not limited to the following embodiments and the examples illustrated in the drawings.

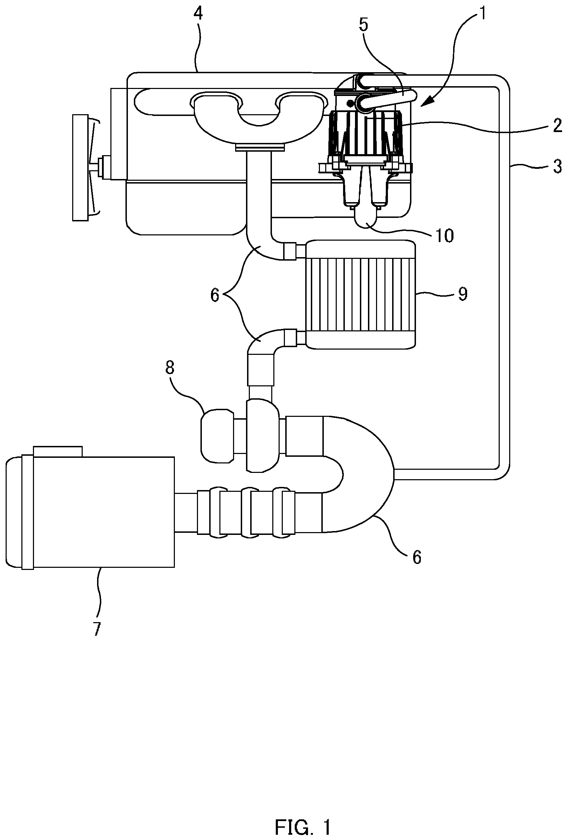

A closed crankcase ventilation system 1 (hereinafter referred to as a ventilation system 1) illustrated in FIG. 1 is an example of applying the present invention. As illustrated in FIG. 1, the ventilation system 1 includes an oil separator 2, a breather pipe 3, a gas introduction pipe 5, and an oil supply pipe 10. The oil separator 2 is mounted to a side surface of an engine 4. The gas introduction pipe 5 is coupled to the engine 4 and the oil separator 2. Blow-by gas discharged from the crankcase of the engine 4 passes through the gas introduction pipe 5 and is supplied to the oil separator 2. The blow-by gas supplied from the crankcase of the engine 4 to the oil separator 2 is processing-target gas, and this blow-by gas contains mist oil. The oil separator 2 processes the supplied blow-by gas and separates the mist oil from the blow-by gas.

The breather pipe 3 is coupled between the upper portion of the oil separator 2 and an intake-side flow passage 6 of the engine 4. The already-processed blow-by gas discharged from the oil separator 2 passes through the breather pipe 3 and is restored to the intake-side flow passage 6. Specifically, the already-processed blow-by gas is restored to a part of the intake-side flow passage 6 coupling an air filter 7 and a turbocharger 8. The restored blow-by gas is mixed with fresh air from the air filter 7 and is compressed by the turbocharger 8. Afterwards, the blow-by gas is cooled by a charge cooler 9 and supplied to the engine 4.

The oil supply pipe 10 is coupled between the lower portion of the oil separator 2 and the engine 4. The oil delivered from the engine 4 passes through the oil supply pipe 10 and is supplied to the oil separator 2. The oil supplied to the oil separator 2 is a separating oil (not driving oil). A flow of the oil is used as a power for the oil separator 2, and the power operates the oil separator 2 (especially, a rotor unit 50 described later) . Since the oil supplied to the oil separator 2 is a part of lubricating oil used by the engine 4, the temperature of the oil is approximately 80 to 110°C. The operation of the oil separator 2 by the oil separates the mist oil from the blow-by gas. The separated mist oil is mixed, at the inside of the oil separator 2, with the oil supplied to the oil separator 2 through the oil supply pipe 10. The mixed oil is returned to the engine 4.

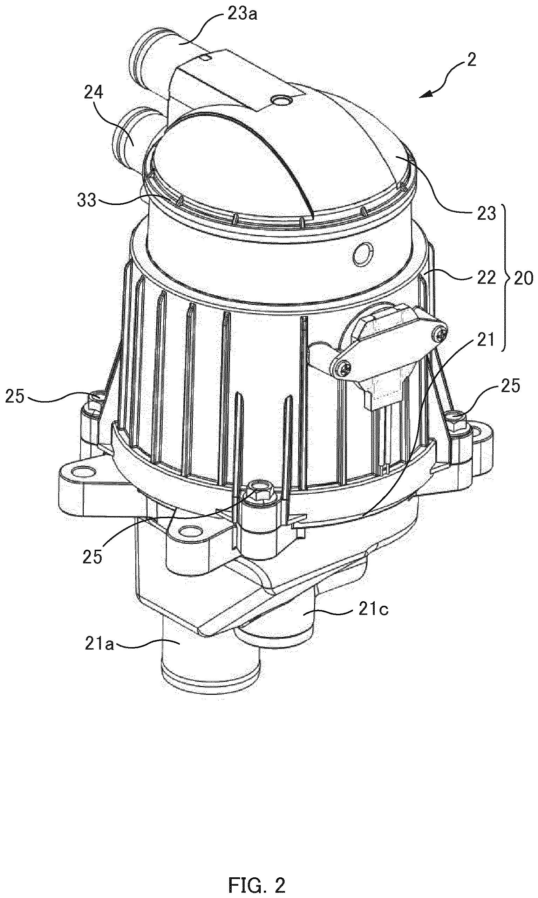

The following describes the oil separator 2 in detail. As illustrated in FIGS. 2 to 6, this oil separator 2 includes a housing 20, a lower partition wall member 31, a middle partition wall member 32, an upper partition wall member 33, the rotor unit 50, and a PCV valve 90. The housing 20 includes a lower case 21, a middle case 22, and an upper case 23. By combining these lower case 21, middle case 22, and upper case 23 with one another, the housing 20 is assembled, forming an internal space at the inside of the housing 20. The lower partition wall member 31, the middle partition wall member 32, and the upper partition wall member 33 are attached to the housing 20. The internal space of the housing 20 is partitioned by the lower partition wall member 31, the middle partition wall member 32, and the upper partition wall member 33. The rotor unit 50, the PCV valve 90, and a similar component are attached to the housing 20 while being internally housed in the internal space of the housing 20.

Unless otherwise stated, an axial direction indicates a direction parallel to a rotation axis of the rotor unit 50, a circumferential direction indicates a circumferential direction around the rotation axis of the rotor unit 50, and a radial direction indicates a direction perpendicular to the rotation axis of the rotor unit 50. With the oil separator 2 mounted to the engine 4, the rotation axis of the rotor unit 50 extends in the up-down direction (specifically, a vertical direction).

The following describe the housing 20 and the internal space, and also describe the partitions of the internal space in the housing 20 partitioned by the lower partition wall member 31, the middle partition wall member 32, and the upper partition wall member 33.

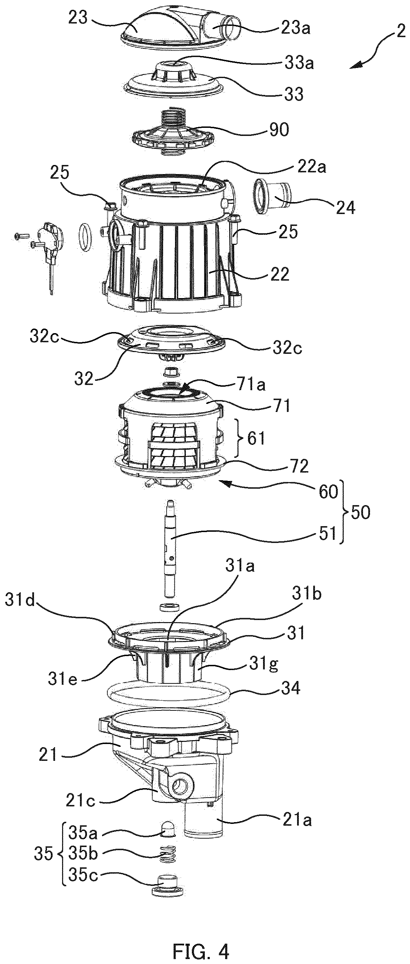

As illustrated in FIGS. 4 to 6 and 9, the middle case 22 is a part that constitutes the central part of the internal space in the housing 20. The middle case 22 has a tubular shape, and the top and the bottom of the middle case 22 are open. A partition wall 22a is disposed in the upper portion of the middle case 22. The partition wall 22a divides a hollow in the middle case 22 into a space located upper than the partition wall 22a and a space located lower than the partition wall 22a.

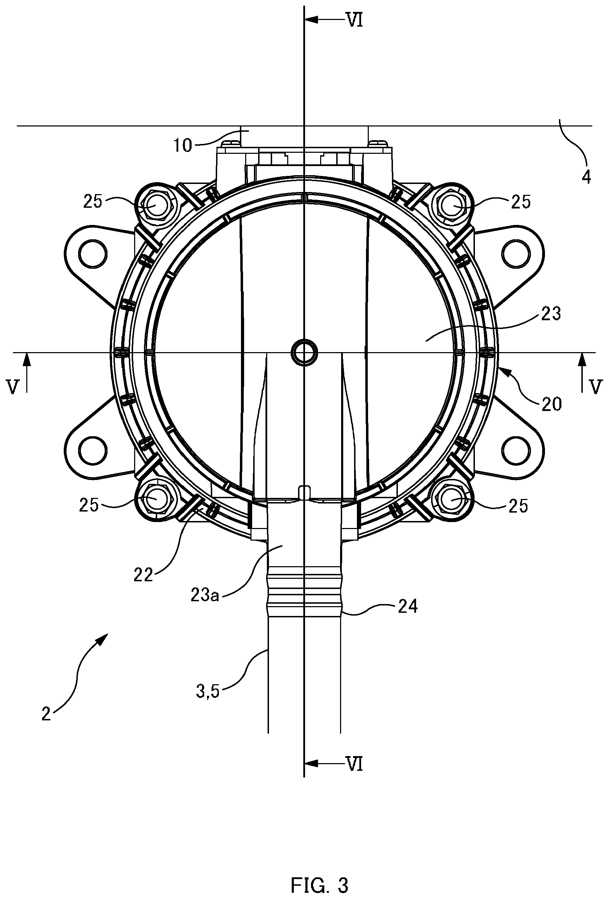

An inlet hole 22b is formed on the outer peripheral surface of the middle case 22. The inlet hole 22b is positioned at the upper portion of the middle case 22 and is located lower than the partition wall 22a; therefore, the inlet hole 22b communicates with the hollow located lower than the partition wall 22a. To the inlet hole 22b, one end of a suction pipe 24 is coupled. The other end of the suction pipe 24 is coupled to the gas introduction pipe 5 (see FIGS. 1 and 3). Accordingly, the blow-by gas supplied from the engine 4 to the oil separator 2 passes through the suction pipe 24 and the inlet hole 22b and is introduced to the part located lower than the partition wall 22a in the internal space of the housing 20 (specifically, an introduction path 41 described later).

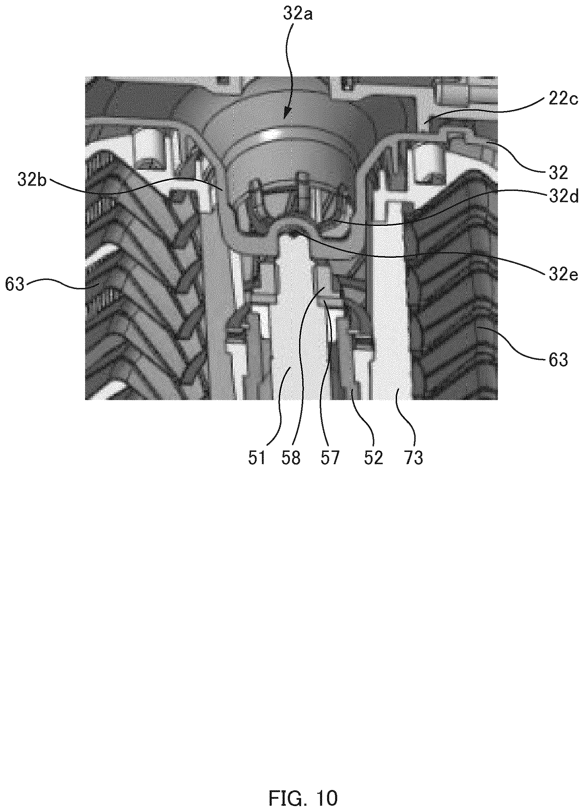

The middle case 22 houses the disk-shaped, middle partition wall member 32 at a position away from and lower than the partition wall 22a. The peripheral edge portion of the middle partition wall member 32 is connected to the inner peripheral surface of the middle case 22. The middle partition wall member 32 vertically partitions the hollow in the middle case 22 (the hollow located lower than the partition wall 22a). A cylindrical-shaped fitted portion 32b projects downward and is disposed at the center portion of the lower surface of the middle partition wall member 32. As illustrated in FIG. 10, the hollow in the fitted portion 32b (a supply hole 32a) opens at the top surface of the middle partition wall member 32 and opens at the lower end of the fitted portion 32b. Supporting portions 32d are disposed at the opening of the lower end of the fitted portion 32b. The supporting portions 32d radially extend from the center of the opening, and are coupled to the inner peripheral surface of the fitted portion 32b. A concave portion 32e is formed on the lower surface at the center of the supporting portions 32d. Since the supporting portions 32d extend radially, the supporting portions 32d do not obstruct the hollow in the fitted portion 32b. The supporting portions 32d support the upper end of a spindle shaft 51 (to be described later).

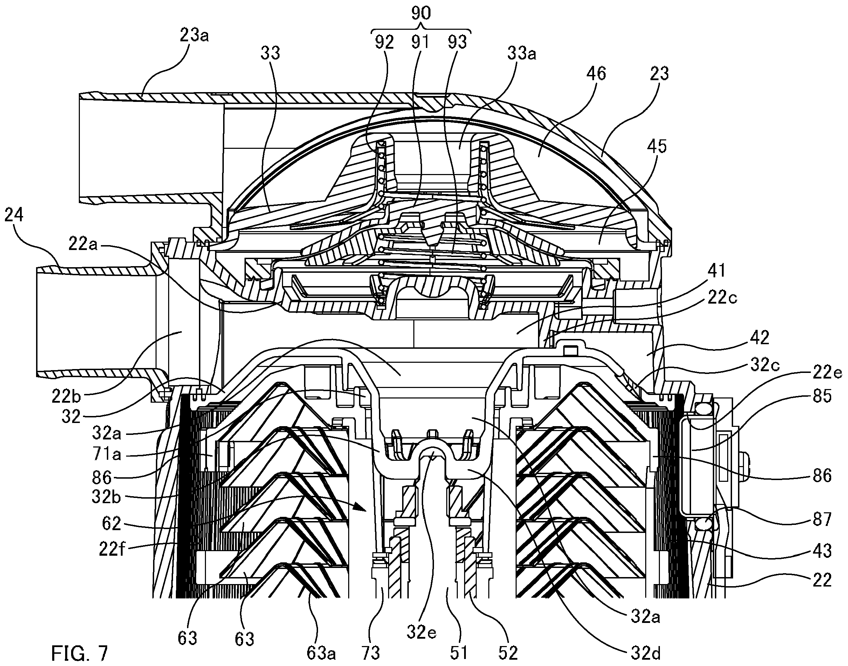

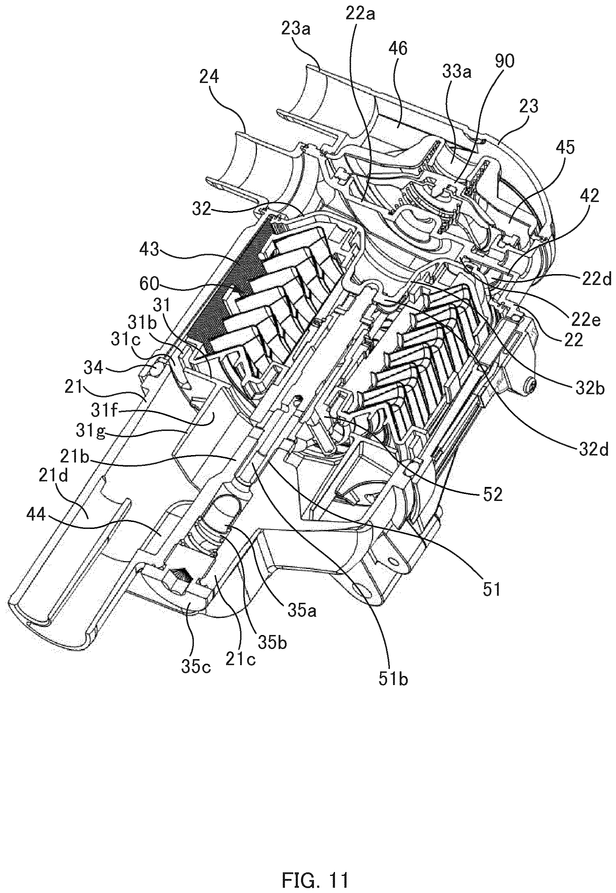

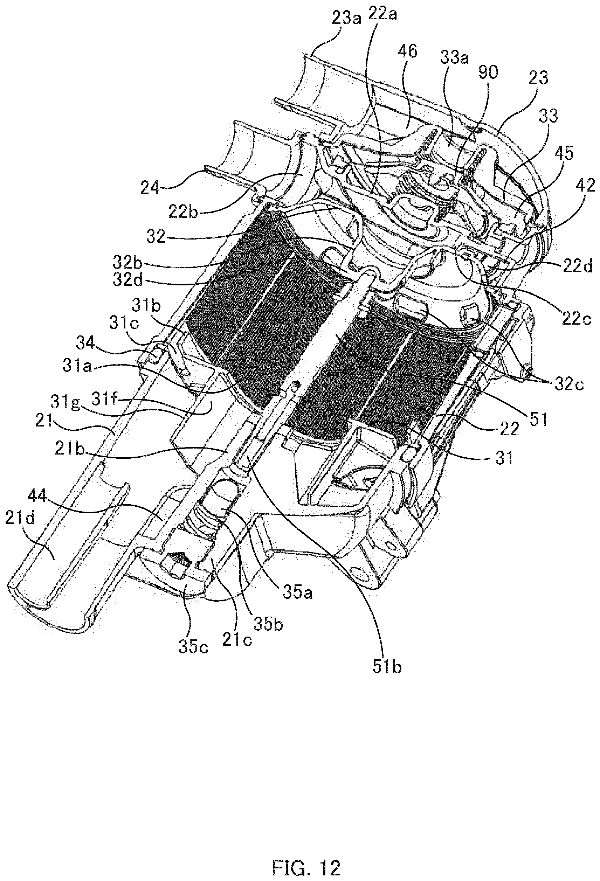

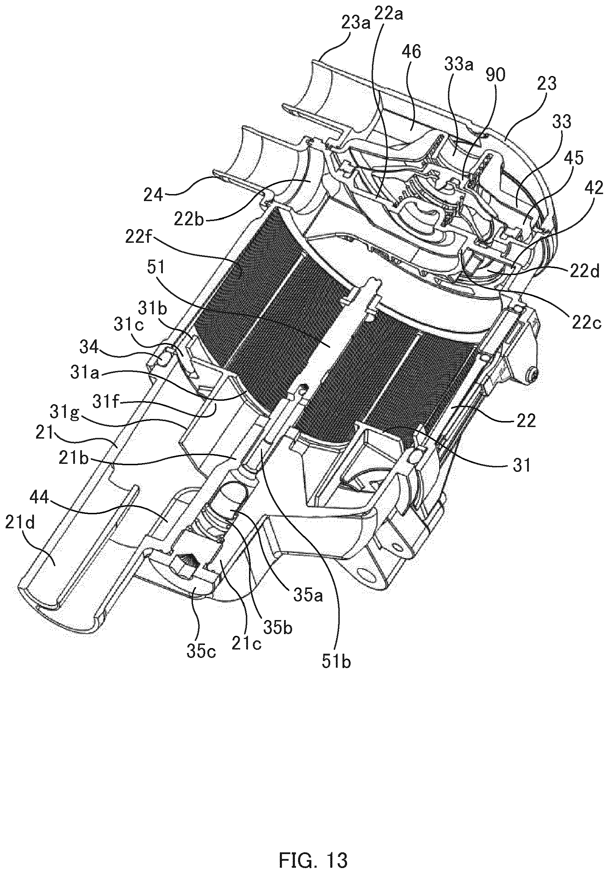

FIG. 12 omits an illustration of a rotor 60 of the rotor unit 50 for easy viewing of the internal structure of the housing 20. Further, FIG. 13 omits illustrations of the rotor 60 of the rotor unit 50 and the middle partition wall member 32 for easy viewing of the internal structure of the housing 20. As illustrated in FIGS. 7 and 11 to 13, a rib (a partition portion) 22c is disposed projecting at the lower surface of the partition wall 22a. The rib 22c is in hermetically contact with the top surface of the middle partition wall member 32, and the contact part of the rib 22c with the top surface of the middle partition wall member 32 becomes airtight. This rib 22c is shaped into a U shape viewed from below (FIG. 13 illustrates a half body of the U shape) . Both ends of the U-shaped rib 22c are connected to the inner peripheral surface of the middle case 22, and between the both ends, the inlet hole 22b is disposed. The rib 22c divides the space between the middle partition wall member 32 and the partition wall 22a into two spaces: a space 41 (hereinafter referred to as the introduction path 41) on a side closer to both of the inlet hole 22b and the upper opening of the fitted portion 32b; and a space 42 (hereinafter referred to as a first chamber 42) surrounding the introduction path 41. The blow-by gas passing through the inlet hole 22b and introduced into the housing 20 passes through the introduction path 41 and through the inside of the fitted portion 32b. Further, the blow-by gas is sent below the middle partition wall member 32.

The introduction path 41 is a path for blow-by gas in a state before the blow-by gas is introduced to the rotor unit 50. The first chamber 42 is a path for the blow-by gas discharged from the rotor unit 50. The rotor unit 50 is to separate the mist oil from the blow-by gas; accordingly, the mist oil is removed from the blow-by gas discharged from the rotor unit 50.

The above-described introduction path 41 and first chamber 42 can be disposed above the rotor unit 50 because the space between the partition wall 22a and the middle partition wall member 32 is divided by the rib 22c. Since the introduction path 41 is above the rotor unit 50, both the introduction path 41 and the inlet hole 22b can be disposed at the upper portion of the housing 20.

The partition wall 22a has a communication hole 22d (see FIG. 13 in particular) that vertically penetrates the partition wall 22a. The communication hole 22d is positioned outside the rib 22c, and the hollow above the partition wall 22a communicates with the first chamber 42 through the communication hole 22d. The communication hole 22d is a flow passage for the processed blow-by gas from which the mist oil has been removed.

Meanwhile, the partition wall 22a closes the upper part of the introduction path 41, and separates the hollow above the partition wall 22a and the introduction path 41.

A plurality of communication holes 32c are formed on the peripheral edge portion of the middle partition wall member 32 so as to vertically penetrate the middle partition wall member 32. These communication holes 32c are arranged at even intervals along the circumferential direction. The communication holes 32c are positioned outside the rib 22c. The hollow on the lower side of the middle partition wall member 32 communicates with the first chamber 42 through the communication holes 22d. The communication holes 22d are flow passages for processed blow-by gas from which the mist oil has been removed.

The upper partition wall member 33 is mounted in an airtight manner to the upper end of the middle case 22, and closes the upper opening of the middle case 22. The upper partition wall member 33 is located away upward from the partition wall 22a, and a hollow 45 (hereinafter referred to as a second chamber 45) is formed between the upper partition wall member 33 and the partition wall 22a. The upper partition wall member 33 has a center portion provided with a communicating hole (a valve hole) 33a, which vertically penetrates the upper partition wall member 33. The communicating hole 33a is a flow passage for the processed blow-by gas from which the mist oil has been removed.

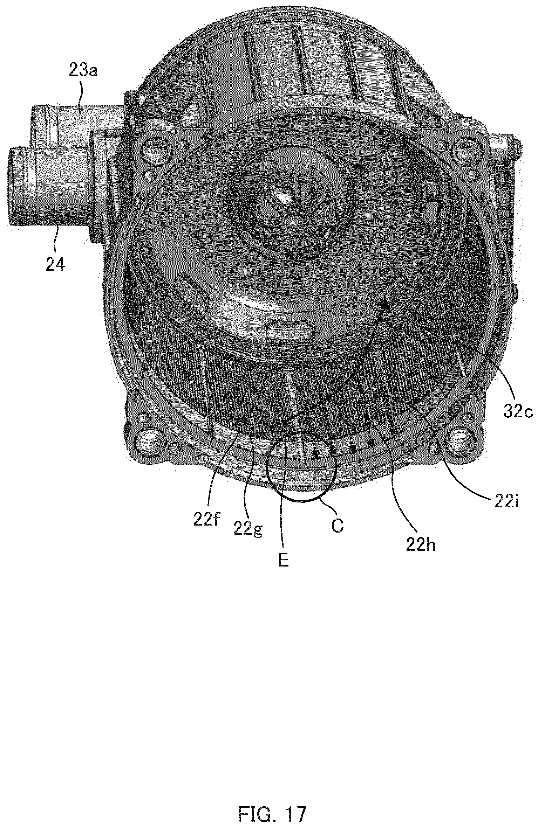

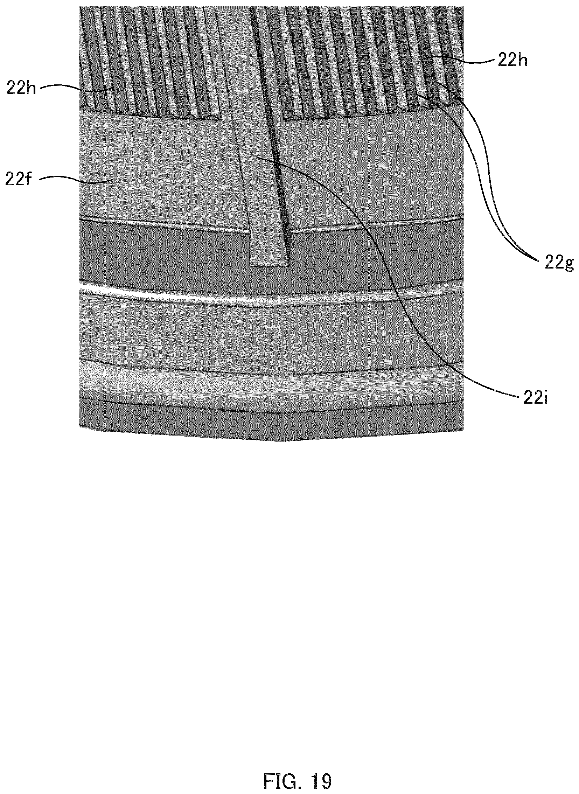

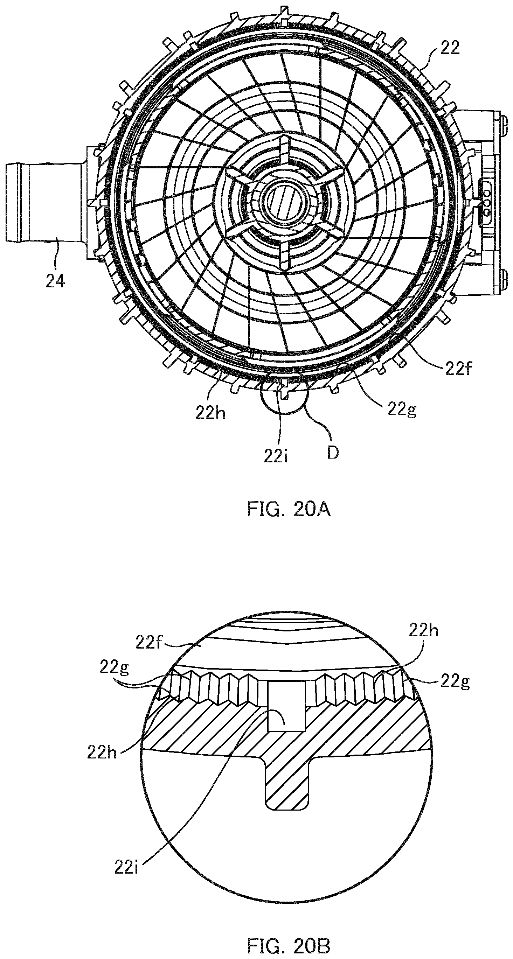

As shown in FIGS. 17, 19 and 20, on the inner peripheral surface 22f of the middle case 22, a plurality of convex portions 22g are provided arranged adjacently in a direction along the inner peripheral surface, and extending in the up-down direction. Thus, between the adjacent convex portions 22g and 22g, grooves 22h extending in the up-down direction can be provided. These grooves 22h capture oil that has been separated by rotation of the rotor 60. The grooves 22h guide the captured oil so that the oil drops downward along the grooves 22h in an internal space that has a separation chamber 43, due to capillary action without being affected by a swirl flow (wind indicated by an arrow E in FIG. 17) caused by rotation of the rotor 60. Accordingly, the separated oil can be prevented from forming oil films on the inner peripheral surface 22f of the middle case 22 which houses a separation chamber 43, and can also be prevented from being carried away by the swirl flow E caused by the rotation of the rotor 60.

Further, on the inner peripheral surface 22f of the middle case 22, guide portions 22i are provided extending in the up-down direction. The guide portions 22i guide, downward in the internal space including the separation chamber 43, the oil that has been separated by the rotation of the rotor 60.

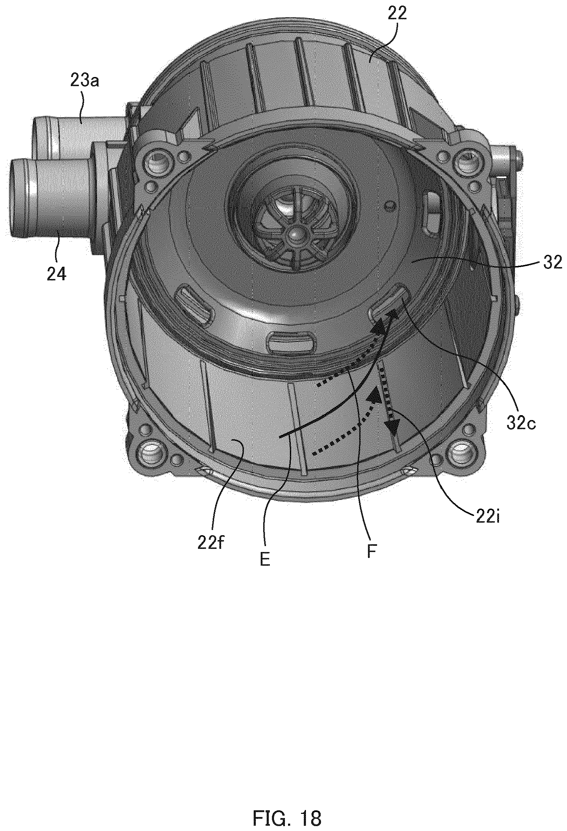

For example, assuming that the guide portions 22i alone are provided on the inner peripheral surface 22f of the middle case 22 as shown in FIG. 18. In this case, when the separated oil is discharged downward on the inner peripheral surface 22f, the swirl flow E caused by the high-speed rotation of the rotor 60 is blowing toward an discharge exit while gradually going upward to the communication holes 32c. Accordingly, there is a problem that, if oil films are formed on the inner peripheral surface 22f of the middle case 22, pushing of the oil films by the swirl flow E moves the oil in the direction toward the discharge exit (a gas discharge portion 23a; to be described later). Finally, the oil flows out of the gas discharge portion 23a (in other words, oil that forms the oil films on the inner peripheral surface 22f is carried away by the swirl flow E). The direction is indicated by arrows F in FIG. 18.

As mentioned above, the oil separator 2 includes the guide portions 22i and the plurality of adjacently-located convex portions 22g which form the grooves 22h extending in the up-down direction on the inner peripheral surface 22f of the middle case 22. The guide portions 22i promote downward movement of the separated oil on the inner peripheral surface 22f, facilitating discharge of the oil from the internal space that includes the separation chamber 43. This can reduce the amount of oil which is captured by grooves 22h between the plurality of convex portions 22g formed on the inner peripheral surface 22f of the middle case 22, and also makes it possible to effectively prevent formation of oil films on the inner peripheral surface 22f. Even if a large amount of oil temporarily flows into the internal space that houses the separation chamber 43, the oil can continuously move (flow) downward by the guide portions 22i, thereby effectively discharging the oil.

The guide portions 22i serving as the second groove and formed on the inner peripheral surface 22f are deeper than the grooves 22h, and the grooves 22h serve as the first groove and are composed of the plurality of convex portions 22g formed similarly on the inner peripheral surface 22f. Accordingly, the guide portions 22i can allow a larger amount of oil to move downward than the grooves 22h, facilitating discharge of the oil from the internal space that houses the separation chamber 43. As a result, the guide portions 22i can promote the reduction of the amount of oil which is captured by the grooves 22h formed on the inner peripheral surface 22f of the middle case 22, and can also effectively prevent formation of oil films on the inner peripheral surface 22f.

Further, the plurality of convex portions 22g are formed in a portion of the inner peripheral surface 22f other than the lower end portion of the inner peripheral surface 22f in the up-down direction (other than an oil process chamber 43b located below the separation chamber 43; to be described later) . The swirl flow E caused by the rotation of the rotor 60 is less likely to affect in the lower end portion of the inner peripheral surface 22f of the middle case 22 than in other portions of the inner peripheral surface 22f. Therefore, the oil is easier to drop downward. Thus, the process for forming the plurality of convex portions 22g can be simplified, since the plurality of convex portions 22g can be formed in the portion of the inner peripheral surface 22f other than the lower end portion thereof in the up-down direction.

The upper case 23 is a part that constitutes the upper part of the internal space in the housing 20. The upper case 23 is constituted of a dome-shaped member with an open lower surface. This upper case 23 covers the upper partition wall member 33 from above. The edge part of the lower opening of the upper case 23 is mounted in an airtight manner to the peripheral edge portion of the upper partition wall member 33. The peripheral edge portion of the upper partition wall member 33 is interposed between the edge part on the lower opening of the upper case 23 and the upper end of the middle case 22. Specifically, the edge part on the lower opening of the upper case 23 is connected to the peripheral edge portion of the upper partition wall member 33 by welding, seizing, bolt tightening, or a similar method. The upper case 23 internally forms a hollow 46 (hereinafter referred to as a third chamber 46). The upper partition wall member 33 partitions the third chamber 46 and the second chamber 45, and the communicating hole 33a communicates with the second chamber 45 and the third chamber 46.

A cylindrical-shaped gas discharge portion 23a is disposed projecting radially outward at a side surface of the upper case 23. This gas discharge portion 23a is coupled to the breather pipe 3. The processed blow-by gas from which the mist oil has been removed passes through the third chamber 46 and then through the gas discharge portion 23a. The blow-by gas is finally discharged to the breather pipe 3. When mounting the upper case 23 to the upper partition wall member 33, adjusting the position of the upper case 23 along the circumferential direction can adjust the direction in which the gas discharge portion 23a projects.

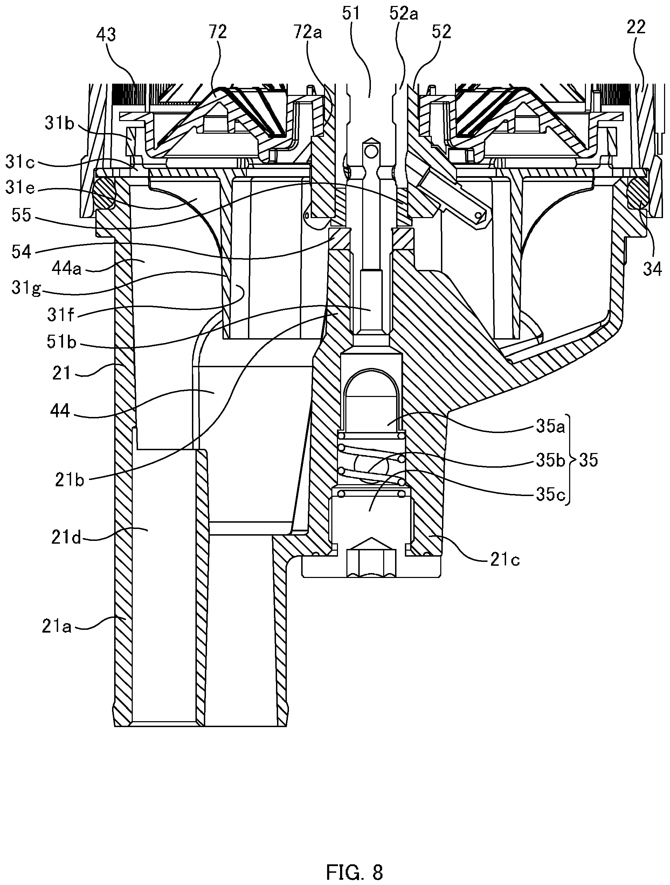

As illustrated in FIGS. 8 and 11 to 13, the lower case 21 is a part that constitutes the lower part of the internal space in the housing 20. This lower case 21 is constituted of a box-shaped member having a bottom and an opened top surface. The upper end portion of the lower case 21 is fitted to the lower end portion of the middle case 22. The lower case 21 and the middle case 22 are fixed with bolts 25 (see FIGS. 2 and 3). Further, a ring-shaped seal 34 and the lower partition wall member 31 are fitted to the lower end portion of the middle case 22. The peripheral edge portion of the lower partition wall member 31 and the seal 34 are interposed between the upper end portion of the lower case 21 and the lower end portion of the middle case 22. The seal 34 improves the air tightness.

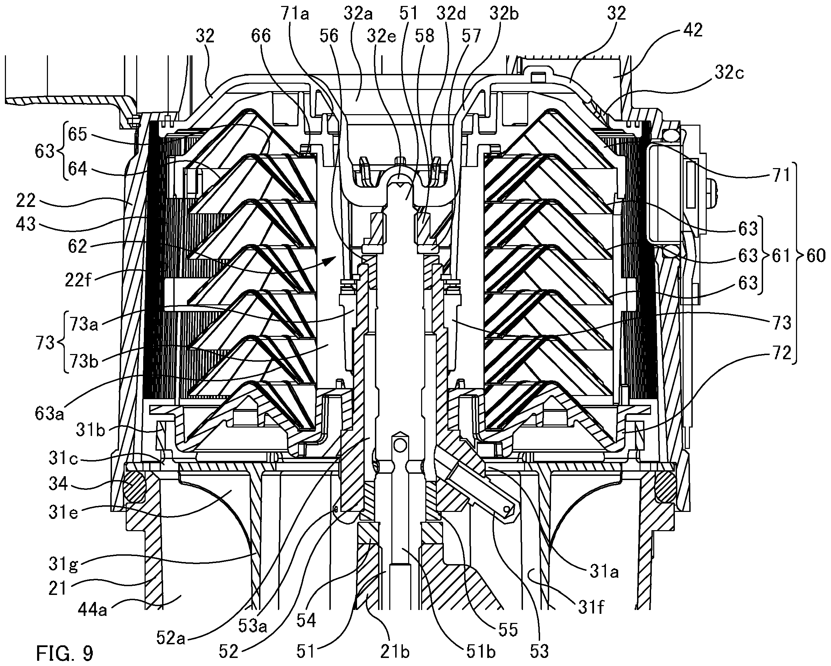

As illustrated in FIG. 9, this lower partition wall member 31 is located away from below the middle partition wall member 32. A separation chamber 43 is formed between the middle partition wall member 32 and the lower partition wall member 31. This separation chamber 43 is a part of the hollow in the middle case 22.

The lower partition wall member 31 has a disk shape. The lower partition wall member 31 has a through hole 31a at its center portion. This lower partition wall member 31 separates a hollow 44 in the lower case 21 (hereinafter referred to as an injection chamber 44) from the separation chamber 43. In other words, the lower case 21 covers the lower surface side of the lower partition wall member 31, and partitions an injection chamber 44 below the lower partition wall member 31.

As illustrated in FIGS. 8 and 11 to 13, the lower case 21 has a communication tube portion 21a facing downward on the front surface. The communication tube portion 21a, which is a tubular member, serves as an outlet for oil injected by nozzles 53 (to be described later). The communication tube portion 21a has an internal space communicating with the internal space in the lower case 21. The distal end portion of the communication tube portion 21a is coupled to the oil supply pipe 10. The distal end portion of the communication tube portion 21a is connected to the side surface of the engine 4 with the oil supply pipe 10 (see FIG. 3) . Thus, the internal space in the communication tube portion 21a is communicated via the internal space in the engine 4. The communication tube portion 21a functions as a flow passage for the blow-by gas.

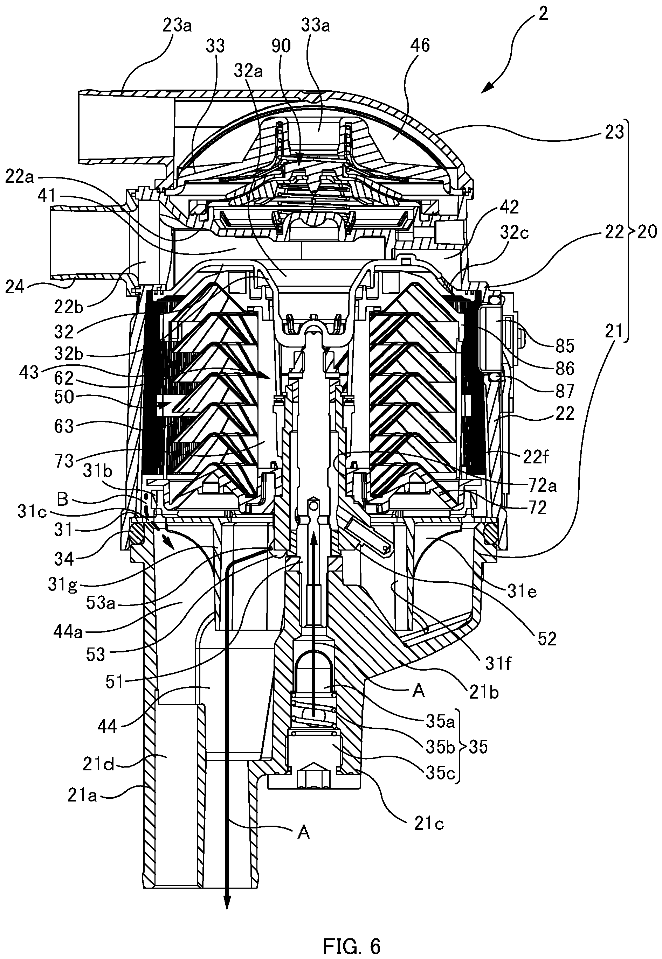

The bottom surface of the lower case 21 is inclined downward to the communication tube portion 21a. The lower case 21 internally includes a cylindrical-shaped oil guide pipe 21b extending upward from the bottom surface of the lower case 21. The oil guide pipe 21b has a joint 21c, which faces the bottom surface of the lower case 21, at the lower end thereof. This joint 21c is coupled to the oil supply pipe 10, and as shown in FIG. 6, the oil supplied from the engine 4 to the oil separator 2 flows upward inside the oil guide pipe 21b. A part of the oil (driving oil) flowing upward inside the oil guide pipe 21b flows to the nozzles 53 through the insides of the spindle shaft 51 and a spindle 52 (to be described later) . Each nozzle 53 is disposed projecting from the outer peripheral surface of the spindle 52 in the injection chamber 44, and the nozzle 53 injects the driving oil in the circumferential direction, thereby rotating the spindle 52 and the rotor 60. The joint 21c internally includes a strainer 35 to filter the oil. This strainer 35 includes a mesh filter 35a, a spring 35b, and a plug 35c. Clogging of the strainer 35 is detected by sensing reduction in the rotations per unit time of the rotor 60 with rotation sensors (a magnetic sensor 85 and a plurality of permanent magnets 86; to be described later), so that the the strainer 35 can be cleaned.

Inside the communication tube portion 21a, a vent opening 21d for facilitating discharge of the separated oil is disposed radially outside an oil guard 31g (to be described later) which serves as a second partition wall on a lower surface of the lower partition wall member 31. The vent opening 21d communicates with a drain hole 31c through a flow passage 44a (both to be described later) . Here, the flow passage 44a is separated from the injection chamber 44 by the oil guard 31g in the lower case 21, and the drain hole 31c is for discharging oil from the separation chamber 43 into the lower case 21.

Providing the vent opening 21d radially outside the oil guard 31g is providing the vent opening 21d outside the trajectory of oil discharged from the nozzles 53. This makes movement of gas easier, and facilitates discharge of oil, thereby improving the discharge performance of oil from inside the middle case 22 (the separation chamber 43). At the time of discharging the separated oil in the separation chamber 43 from the lower case 21 through the communication tube portion 21a which serves as the lowest discharge opening, the oil of a certain volume can be prevented from moving and negative pressure is avoided inside the lower case 21. Consequently, discharge performance of oil can be improved. The oil guard 31g restricts scattering of oil that has injected by the nozzles 53. Accordingly, the oil guard 31g can prevent submersion-in-oil of the drain hole 31c through which oil is discharged from the separation chamber 43 to the lower case 21, and therefore the oil can be effectively discharged through the drain hole 31c toward the lower case 21 below the lower partition wall member 31.

As shown in FIGS. 4 to 6, 8, 9, 14 and 15, on the upper surface side of the lower partition wall member 31, a first partition wall 31b and drain holes 31c are disposed. The first partition wall 31b is provided upright between the inner peripheral surface 22f of the middle case 22 and the outer peripheral edge of the lower holder 72, throughout the entire circumference. The drain holes 31c are arranged below at least a part of the entire circumference of the first partition wall 31b, and vertically penetrate the lower partition wall member 31. Specifically, ribs 31d are provided at certain intervals on the outer circumference of the first partition wall 31b, and drain holes 31c are disposed extending through, below the first partition wall 31b and between adjacent ribs 31d and 31d.

On the lower surface side of the lower partition wall member 31, a tube-shaped oil guard 31g and reinforcing portions 31e are provided. The oil guard 31g extends downward and outside the rotation locus of the nozzles 53, and the reinforcing portions 31e are arranged along the outer circumference of the oil guard 31g at certain intervals. The oil guard 31g may have a polygonal tube shape, and may have a cylindrical shape. However, on the inner peripheral surface 31f of the oil guard 31g, it is preferable that at least either of a plurality of convex portions or a plurality of concave portions are formed extending vertically (the illustration thereof is omitted) . In particular, if the oil guard 31g has a cylindrical shape, the oil guard 31g necessarily has at least either of the plurality of convex portions or the plurality of concave portions.

The flow passage 44a, which is separated from the injection chamber 44 by the oil guard 31g, is formed outside the oil guard 31g. The flow passage 44a extends in the circumferential direction. On the communication tube portion 21a side in the circumferential direction, a lower portion of the flow passage 44a opens to communicate with the vent opening 21d. The drain hole 31c are disposed on the ceiling surface of the flow passage 44a. The flow passage 44a communicates with the separation chamber 43 through the drain hole 31c. Thus, the separated oil flows from the separation chamber 43 through the drain hole 31c to the flow passage 44a in the lower case 21, and the oil moves downward in the flow passage 44a to be discharged through the vent opening 21d out of the communication tube portion 21a.

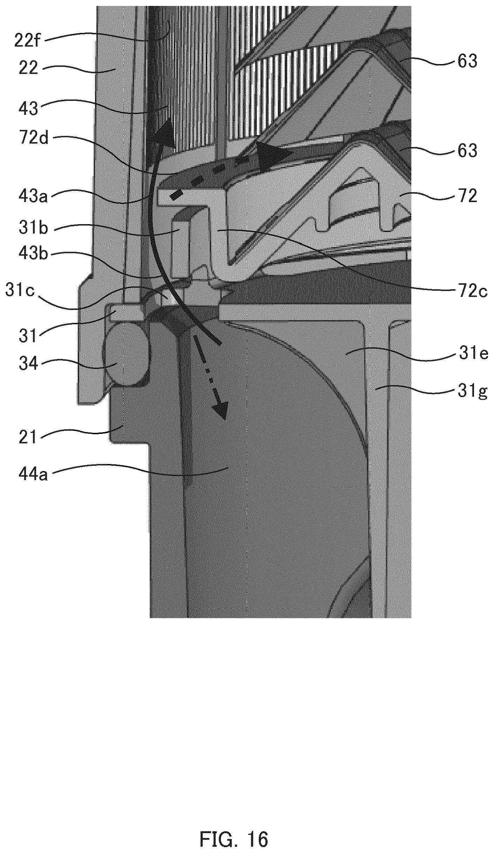

As shown in FIG. 16, the first partition wall 31b is provided upright on the upper surface side of the lower partition wall member 31. Concerning the oil which is to move downward in and be discharged from the inner peripheral surface 22f of the middle case 22, and concerning a swirl flow (wind) which is caused by the rotation of the rotor 60, the first partition wall 31b prevents that oil from being carried by that swirl flow in a clearance 43a. The clearance 43a is located radially outside in the lower portion of the rotor 60, and serves as an escape path of blow-by gas flowing at an ultra-high flow rate. Further, the first partition wall 31b prevents that oil from staying on the inner peripheral surface 22f of the middle case 22. This enables the oil which moves downward and the gas which moves in the opposite direction to pass each other without interference. Consequently, the oil can be continuously discharged to the lower case 21 from the separation chamber 43 having the rotor 60, and accumulation of oil can be avoided in the separation chamber 43, thereby preventing the rotor 60 from being submerged in the oil.

The ribs 31d can prevent the oil from being carried by a swirl flow (wind) caused by the rotation of the rotor 60 when the oil is positioned radially outside the first partition wall 31b and on the lower partition wall member 31. Further, the ribs 31d makes the oil radially outside the first partition wall 31b easier to flow into the drain hole 31c. Consequently, the oil can be discharged efficiently toward the flow passage 44a formed in the lower case 21 below the lower partition wall member 31. The reinforcing portion31e not only reinforces the strength of the lower partition wall member 31, but also inhibits radially outward movement of the oil that has been discharged from the drain hole 31c, thereby facilitating downward movement of the oil.

Further, the oil guard 31g on the lower surface side of the lower partition wall member 31 restricts scattering of oil that has injected by the nozzles 53, making it possible to prevent submersion-in-oil of the drain hole 31c through which oil is discharged from the separation chamber 43 to the lower case 21. On the inner peripheral surface 31f of the oil guard 31g, at least either of the plurality of convex portions or concave portions is formed extending vertically. In this case, concerning oil which is blown against the inner peripheral surface 31f of the oil guard 31g while being swirled accompanying with the rotation of the spindle 52, it is possible to prevent the oil from rotating horizontally by centrifugal force, making the oil easier to move downward. If the oil guard 31g has a polygonal tube shape, it is not necessary to form the convex portions or concave portions.

The following describes the rotor unit 50 in detail with reference to FIGS. 4 to 6 and 9.

The rotor unit 50 is a mechanism to separate the mist oil from the blow-by gas. The rotor unit 50 includes the spindle shaft 51, the spindle 52, the rotor 60, the plurality of nozzles 53, and a similar component.

The spindle shaft 51 is a pillar member. This spindle shaft 51 extends along the up-down direction inside the lower case 21 and the middle case 22, and the spindle shaft 51 is inserted through the through hole 31a of the lower partition wall member 31. The lower end portion of the spindle shaft 51 is coupled to the oil guide pipe 21b. The upper end portion of the spindle shaft 51 is inserted into the concave portion 32e on the lower surfaces of the supporting portions 32d, and is supported by the supporting portion 32d and the middle partition wall member 32. The spindle shaft 51 internally includes a first oil supply passage 51b along the center line of the spindle shaft 51. The lower end of the first oil supply passage 51b opens at the lower end surface of the spindle shaft 51 such that the first oil supply passage 51b communicates with the inside of the oil guide pipe 21b. The upper portion of the first oil supply passage 51b branches into a plurality of passages radially outward at the intermediate portion of the spindle shaft 51. The one end of the first oil supply passage 51b is open at the outer peripheral surface of the spindle shaft 51.

The spindle 52 is a tubular member. The spindle shaft 51 is passed through the inside of this spindle 52. The upper portion of the spindle shaft 51 projects upward from the upper end of the spindle 52. Further, the lower portion of the spindle shaft 51 projects downward from the lower end of the spindle 52. A clearance serving as a second oil supply passage 52a is formed between the outer peripheral surface of the spindle shaft 51 and the inner peripheral surface of the spindle 52. At the upper end portion of the spindle 52, a lower bearing 55 is interposed between the outer peripheral surface of the spindle shaft 51 and the inner peripheral surface of the spindle 52. At the lower end portion of the spindle 52, the lower bearing 55 is interposed between the outer peripheral surface of the spindle shaft 51 and the inner peripheral surface of the spindle 52. The oil flowing upward inside the oil guide pipe 21b flows to the nozzles 53 (to be described later) through the insides of the spindle shaft 51 and the spindle 52 (to be described later) . The joint 21c internally includes the strainer 35 to filter the oil. This strainer 35 includes: the mesh filter 35a disposed inside the joint 21c; the spring 35b to fix this mesh filter 35a; and the plug 35c. This mesh filter 35a filters the engine oil. The removal of the plug 35c can remove the strainer 35 to clean the mesh filter 35a.

Here, if a nozzle 53 is clogged due to a foreign material mixed in the engine oil, the interference of the rotation of the rotor 60 by the foreign material possibly lowers the separation performance. Accordingly, in the oil separator 2 according to the embodiment, the malrotation of the rotor 60 is detected by detecting the rotation speed or the rotations per unit time of the rotor 60 using the magnetic sensor 85 and a plurality of permanent magnets 86 as the rotation sensors (see FIGS. 6 and 7) . At this occasion, the plurality of permanent magnets 86 are arranged at even intervals on the outer peripheral surface of the upper holder 71 along the circumferential direction. The magnetic sensor 85 is mounted to a mounting hole 22e, which is formed on the upper portion of the rear surface of the middle case 22. A ring-shaped rubber seal 87 is interposed between the inner surface of the mounting hole 22e and the outer surface of the magnetic sensor 85. The magnetic sensor 85 is, for example, a Hall effect sensor. During the rotation of the rotor 60, the permanent magnets 86 approach the magnetic sensor 85, and when the magnetic sensor 85 detects the passing of the permanent magnets 86, the magnetic sensor 85 outputs pulses. Since the magnetic sensor 85 is exposed inside the middle case 22, an accuracy of the detection by magnetic sensor 85 is high.

A radial load of the spindle 52 is received by the spindle shaft 51 via the bearings 55 and 56, and the spindle 52 is rotatably supported by the spindle shaft 51. A nut 58 is screwed with the upper end portion of the spindle shaft 51 while the lower end portion of the spindle shaft 51 is inserted into a bearing 54, which is disposed on the top end surface of the oil guide pipe 21b. Between the nut 58 and the bearing 54, interposed are a washer 57, the upper bearing 56, the spindle 52, and the lower bearing 55. A thrust load of the spindle 52 is received by the bearing 54 and the nut 58.

In order to allow the spindle 52 and the bearings 55 and 56 to slightly move along the axial direction, slight clearances are respectively present between the lower bearing 55 and the bearing 54, between the upper bearing 56 and the washer 57, and between the washer 57 and the nut 58. Specifically, while the rotor 60 rotates, the spindle 52 and the bearings 55 and 56 move up along the axial direction. When the rotor 60 stops, the spindle 52 and the bearings 55 and 56 move down.

A slight clearance is also present between the inner peripheral surface of the spindle 52 and the upper bearing 56. The oil inside the oil supply passage 52a flows out to the outside of the spindle 52 through the clearance.

With the spindle 52 being supported to the spindle shaft 51, the spindle 52 is inserted through the through hole 31a on the lower partition wall member 31. The spindle 52 extends upward from the through hole 31a and also extends downward from the through hole 31a. The plurality of nozzles 53 are disposed projecting from the outer peripheral surface of the lower portion of the spindle 52 (especially, a portion lower than the lower partition wall member 31). These nozzles 53 are arranged at even intervals along the circumferential direction (for example, the intervals of 120°). These nozzles 53 are disposed in the injection chamber 44 and are disposed inside the oil guard 31g. These nozzles 53 inject the oil, and the injection pressure of the oil generates a power to rotate the spindle 52.

The nozzles 53 have a cylindrical shape. A hollow in each nozzle 53 opens at the base end of the nozzle 53, and the hollow in the nozzle 53 is closed at the distal end of the nozzle 53. The base end of the nozzle 53 extends through from the outer peripheral surface to the inner peripheral surface of the spindle 52. The base end of the nozzle 53 is coupled to the spindle 52, and therefore the hollow in the nozzle 53 communicates with the second oil supply passage 52a. The nozzle 53 is mounted at an angle of 45 degrees obliquely downward with respect to the direction of the axis of the spindle 52. Injection openings 53a are formed at peripheral surfaces on the distal end portions of the nozzles 53 so as to communicate with the hollows in the nozzles 53. The injection opening 53a faces in the circumferential direction around the axis of the spindle 52.

The rotor 60 is a part which separates the oil mist from the blow-by gas. This rotor 60 has a tubular appearance. The center part of the rotor 60 is configured as a space 62. The center-side space 62 extends through the rotor 60 in the up-down direction, to open the upper and lower sides of the center-side space 62. The spindle 52 is inserted into this center-side space 62, thus combining the spindle 52 and the rotor 60 with one another. Therefore, the rotor 60 rotates together with the spindle 52 because of the injection pressure of the oil by the nozzles 53.

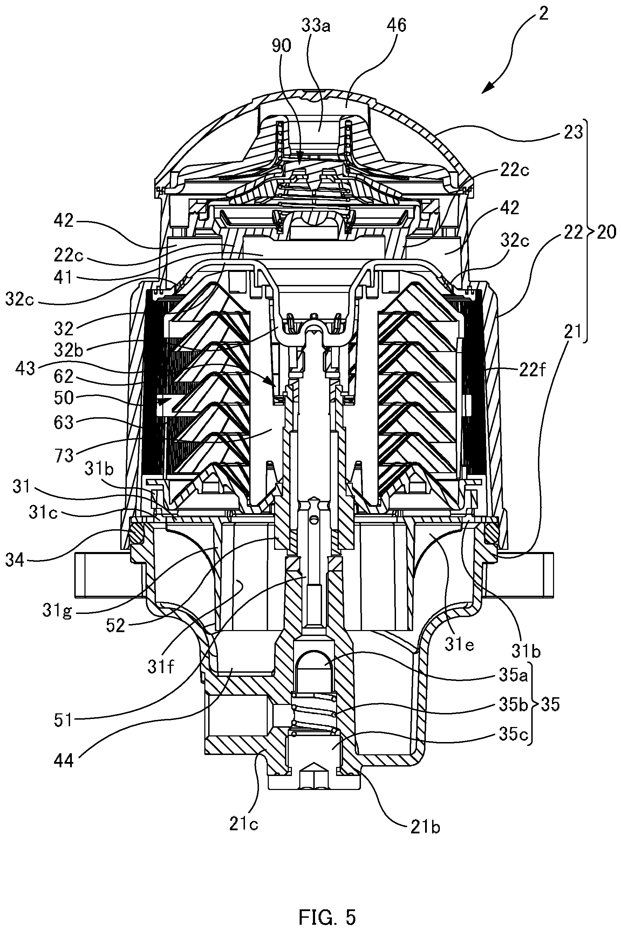

This rotor 60 includes a separation disk group 61, an upper holder 71, a lower holder 72, and a disk holding portion 73. The separation disk group 61 is constituted of a plurality of separation disks 63 stacked in the direction of the axis of the spindle 52. A plurality of convex portions (for example, ribs and projections) are disposed on the top surface and/or the lower surface of each separation disk 63. The convex portions abut on the adjacent separation disk 63 to form a clearance between the stacked separation disks 63. As illustrated in FIG. 8, if the convex portions serve as ribs 63a, these ribs 63a are radially disposed from the inner peripheral edge to the outer peripheral edge of each of the separation disks 63. Although FIGS. 5 to 7, 9 to 11 and 16 draw the separation disks 63 spaced from one another, the actual spaces are extremely narrow, set to be, for example, 0.3 mm or less. The intervals between the separation disks 63 are determined by the height of the convex portions (the ribs 63a) .

The following describes the separation disk 63 in detail. The separation disk 63 is a body of revolution around the axis of the spindle 52. More specifically, the separation disk 63 has a shape obtained by rotating an inverted V-shaped curve around the axis of the spindle 52. Thus, the separation disks 63 have a mounting opening 66 at the center. Stacking the separation disks 63 forms the center-side space 62 formed of these mounting openings 66.

The separation disk 63 includes an inner peripheral part 65 and an outer peripheral part 64 located outside with respect to the inner peripheral part 65.

The inner peripheral part 65 has a plate shape that forms the conical surface of the frustum of a hypothetical inverted circular cone whose apex is located below the axial center of the separation disk 63. Therefore, the inner peripheral part 65 is inclined upward in the radially outward direction. The outer peripheral part 64 has a plate shape that forms the conical surface of the frustum of a hypothetical circular cone whose apex is located above the axial center of the separation disk 63. Therefore, the outer peripheral part 64 is inclined downward in the radially outward direction. The inner peripheral edge of the outer peripheral part 64 is connected to the outer peripheral edge of the inner peripheral part 65, and the outer peripheral part 64 is continuously extends outward from the outer peripheral edge of the inner peripheral part 65. Thus, the outer peripheral part 64 and the inner peripheral part 65 form a single integrated unit. The conical surface means the outer peripheral surface of a frustum.

As described above, the outer peripheral part 64 is bent downward from the outer peripheral edge of the inner peripheral part 65, and the inclination direction of the inner peripheral part 65 is opposite to the inclination direction of the outer peripheral part 64. Since the separation disk 63 is bent between the inner peripheral edge and the outer peripheral edge, the rigidity of the separation disk 63 is improved. Further, since a corner portion (a ridge portion) interposed between the inner peripheral part 65 and the outer peripheral part 64 is rounded, the rigidity of the separation disk 63 is improved. Therefore, even a thin separation disk 63 can reduce a deformation of the separation disk 63. The thin separation disks 63 can increase the number of stacked separation disks 63 and the separation efficiency of oil.

The separation disk 63 is bent so as to increase the length of the separation disk 63 along the disk surface from the inner peripheral edge to the outer peripheral edge. This ensures a large surface area of the separation disk 63, and improves the separation efficiency of oil.

Further, this can suppress increase of the height of these stacked separation disks 63 even when the number of stacked separation disks 63 increases.

The separation disk 63 is bent so as to reduce the height of the separation disk 63 even if the inner peripheral part 65 and the outer peripheral part 64 define inclined angles having steep slopes with respect to the radial direction. When the inclined angles of the inner peripheral part 65 and the outer peripheral part 64 with respect to the radial direction are the steep slopes, the separation efficiency of oil is high.

The inclined angle of the inner peripheral part 65 with respect to the radial direction is 45° or less, and the inclined angle of the outer peripheral part 64 with respect to the radial direction is 45° or less. As long as the inclined angles of the inner peripheral part 65 and the outer peripheral part 64 are both 45° or less, the angle of the corner portion interposed between the inner peripheral part 65 and the outer peripheral part 64 is a right angle or an obtuse angle. In the case where the angle of the corner portion interposed between the inner peripheral part 65 and the outer peripheral part 64 is the right angle or the obtuse angle, the intervals between the stacked separation disks 63 can be prevented from increasing. This allows stacking the larger number of separation disks 63. As long as the inclined angles of the inner peripheral part 65 and the outer peripheral part 64 are 45°, the intervals between the separation disks 63 can be prevented from deteriorating. Further, the deterioration of separation efficiency can be inhibited.

As illustrated in FIG. 9, by attaching the plurality of separation disks 63 to the upper holder 71, the lower holder 72, and the disk holding portion 73 assembles the rotor 60. The separation chamber 43 internally houses this rotor 60.

As described above, devising the shape of the separation disks 63 lowers the height of the rotor 60, thereby ensuring also lowering the height of the separation chamber 43. Further, the distance from the lower partition wall member 31 to the middle partition wall member 32 can be shortened, and thereby the lower partition wall member 31 is arranged higher. Therefore, the nozzles 53 (especially the injection openings 53a) can be disposed lower than the lower partition wall member 31 and the lowest separation disk 63. This can prevent the nozzles 53 from injecting the oil toward the lower partition wall member 31.

As illustrated in FIGS. 5, 6 and 9, since the separation disks 63 are bent, the vertical position of the inner peripheral edge of each separation disk 63 is close to the vertical position of the outer peripheral edge of the same. Preferably, the vertical position of the inner peripheral edge of each separation disk 63 matches with the vertical position of the outer peripheral edge of the same. The lower partition wall member 31 is disposed extending in the circumferential direction and the radial direction. This makes it possible to reduce the vertical length of the separation chamber 43, and thereby the compact housing 20 can be realized.

Even in the case where the nozzles 53 are disposed lower than the lower partition wall member 31, the nozzles 53 are disposed higher and are located near the lower partition wall member 31. Since the lower partition wall member 31 occupies particular circumferential and radial plane, even with the nozzles 53 disposed higher, the oil injected from the nozzles 53 (especially the injection openings 53a) can be prevented from being blown to the lower partition wall member 31. Since the nozzles 53 are disposed near the lower partition wall member 31, the vertical length of the injection chamber 44 can be reduced, and therefore the compact housing 20 can be realized.

As illustrated in FIG. 9, the disk holding portion 73 is inserted into the mounting opening 66 of the separation disks 63, and the separation disks 63 are mounted to the disk holding portion 73. The spindle 52 is inserted into the disk holding portion 73, and the outer peripheral surface of the spindle 52 abuts on the disk holding portion 73. A retaining ring and washers (not shown) attach the spindle 52 to the disk holding portion 73. This disk holding portion 73 includes a hub portion 73a and a plurality of spoke portions 73b. The hub portion 73a has a ring shape. The spindle 52 is inserted into the hub portion 73a, fixed to the hub portion 73a. Each of the spoke portions 73b has a plate shape extending radially outward from the hub portion 73a. These spoke portions 73b are inserted into the mounting opening 66 of the stacked separation disks 63 along the up-down direction. Since these spoke portions 73b are arranged on the edge of the mounting opening 66 disposed around the circumference, a clearance is formed between the adjacent spoke portions 73b. The spoke portions 73b are fixed to the separation disks 63.

The upper holder 71 holds the plurality of stacked separation disks 63 from above. The lower holder 72 holds these separation disks 63 from below. The separation disks 63 are interposed between the upper holder 71 and the lower holder 72, and thus the upper holder 71 and the lower holder 72 hold the separation disks 63. A plurality of engaging hooks 74 are disposed extending downward from the outer peripheral portion of the upper holder 71. Lower end portions of the engaging hooks 74 are locked to the outer peripheral portion of the lower holder 72.

Similar to the separation disk 63, the upper holder 71 has a shape obtained by rotating an inverted V-shaped curve around the axis of the spindle 52. Therefore, the inner peripheral part of the upper holder 71 is inclined upward in the radially outward direction, and the outer peripheral part of the upper holder 71 is inclined downward in the radially outward direction. The same applies to the lower holder 72.

As illustrated in FIG. 9, an opening 71a serving as the upper opening of the center-side space 62 is formed at the center of the upper holder 71. The inner peripheral edge of the upper holder 71 is connected to the upper ends of the spoke portions 73b, and the spoke portions 73b and the upper holder 71 are formed as a single unit. The fitted portion 32b of the middle partition wall member 32 is inserted into the opening 71a on the upper holder 71.

As illustrated in FIGS. 6 and 8, an opening 72a serving as the lower opening of the center-side space 62 is formed at the center portion of the lower holder 72. The spindle 52 is inserted into the opening 72a of the lower holder 72. The peripheral portion of the opening 72a is interposed between the outer peripheral surface of the lower portion of the spindle 52 and the lower end of the disk holding portion 73. The retaining ring fixes the spindle 52 to the lower holder 72. The outer peripheral surface of the lower portion of the spindle 52 is connected to the edge of the opening 72a on the lower holder 72, thus the spindle 52 closes the lower opening of the center-side space 62.

In the present embodiment, a through hole penetrating the lower holder 72 in the up-down direction is only the opening 72a through which the spindle 52 is inserted. Accordingly, concerning a communication hole disposed in the rotor 60 on the center side of the lower holder 72, eliminating that communication hole can prevent processing-target gas from leaking downward from inside the inner peripheral edge of the lower holder 72. In addition, even if lampblack produced at a high temperature is sucked, large drops of mist which do not exist at low temperature are not sucked, making it possible to avoid the decrease of the separation efficiency.

As illustrated in FIG. 16, a tubular-shaped (e.g., cylindrical-shaped) partition wall 72c is disposed projecting upward on the outer peripheral edge of the lower holder 72. A flange 72d is disposed extending radially outward at the upper end of the partition wall 72c. The outer peripheral edge of the flange 72d is located away from the inner peripheral surface 22f of the middle case 22, and a clearance 43a is formed between the outer peripheral edge of the flange 72d and the inner peripheral surface 22f of the middle case 22. Between the inner peripheral surface 22f of the middle case 22 and the partition wall 72c, the first partition wall 31b of the lower partition wall member 31 is arranged. The flange 72d is located away above the top surface of the lower partition wall member 31. An oil process chamber 43b is formed below the flange 72d. The oil process chamber 43b and the separation chamber 43 communicate with each other through the clearance 43a. The drain holes 31c extend vertically through the lower partition wall member 31 inside the oil process chamber 43b.

The pressure inside the oil process chamber 43b is lower than the pressure inside the separation chamber 43. Further, a difference between the pressure inside the oil process chamber 43b and the pressure inside the injection chamber 44 is small. Therefore, the oil above the lower partition wall member 31 continuously flows into the drain hole 31c, and a backflow of the oil can be prevented.

As illustrated in FIG. 9, when the rotor 60 is attached to the spindle 52, the nozzles 53 are positioned lower than the inner peripheral edge of the inner peripheral part 65 of the lowest separation disk 63. Further, the nozzles 53 are positioned lower than the outer peripheral edge of the outer peripheral part 64 of the lowest separation disk 63. Therefore, a part located radially outside with respect to the nozzles 53 is not surrounded by the separation disks 63. This configuration allows disposing the lower partition wall member 31 along the radial direction as described above. Further, the oil injected by the nozzles 53 does not interfere with the lower partition wall member 31, the rotor 60, and a similar component to thereby secure a flying area of the injected oil.

In a state where the rotor unit 50 is rotatably mounted to and inside the housing 20 as described above, the separation disks 63 extend in the radial direction across and below the communication holes 32c on the middle partition wall member 32 as illustrated in FIG. 7. Therefore, the communication holes 32c are disposed radially inside with respect to the outer peripheral edges of the separation disks 63.

Subsequently, the following describes the PCV valve 90 in detail with reference to FIGS. 7 and 11 to 13. The PCV valve 90 adjusts a flow rate of the recirculated blow-by gas, and thereby appropriately adjusts the intake air pressure of the engine 4 (FIG. 1) and a pressure at the crankcase side. Specifically, the PCV valve 90 adjusts the opening width of the communicating hole 33a of the upper partition wall member 33, and therefore adjusts the flow rate of the blow-by gas.

The PCV valve 90 is mounted in the second chamber 45. This PCV valve 90 includes a diaphragm 91, an upper spring 92, and a lower spring 93. The diaphragm 91 is a disk-shaped valve element manufactured by molding rubber and resin. This diaphragm 91 is housed inside the second chamber 45 and disposed below the communicating hole 33a of the upper partition wall member 33. The outer edge portion of this diaphragm 91 is bonded to the top surface of the partition wall 22a. The communication hole 22d of the partition wall 22a is disposed outside with respect to the outer edge portion of the diaphragm 91.

The upper spring 92 and the lower spring 93 are elastic members to support the center portion of the diaphragm 91 to be movable in the up-down direction. The upper spring 92 is placed above the center portion of the diaphragm 91 and interposed between the diaphragm 91 and the upper partition wall member 33. The lower spring 93 is placed below the center portion of the diaphragm 91 and between the diaphragm 91 and the partition wall 22a. The diaphragm 91 is interposed between these upper spring 92 and lower spring 93 so as to be movably supported.

Subsequently, the following describes operations of the oil separator 2.

A part of the oil (driving oil) supplied from the engine 4 to the oil separator 2 flows through the oil guide pipe 21b, through the first oil supply passage 51b, through the second oil supply passage 52a into the nozzles 53. The driving oil inside the nozzles 53 is injected from the injection openings 53a. The direction of injecting the driving oil from the injection openings 53a is a circumferential direction around the axis of the spindle 52. More specifically, the direction of injecting the driving oil is a direction perpendicular to the axis of the spindle 52. In the case where the axis of the spindle 52 is aligned with the vertical direction, the direction of injecting the driving oil is the horizontal direction. The injection pressure of the driving oil rotates the spindle 52 and the rotor 60 around the axis of the spindle 52. The direction of the rotation of the spindle 52 and the rotor 60 is a direction opposite to the direction of injecting the driving oil.

There may be a case where the rotor 60 performs a precession during the rotation of the rotor 60. However, as described above, by devising the shape of the separation disks 63, the height of the rotor 60 decreases, and the center of gravity of the rotor 60 is close to a fulcrum of the precession. Accordingly, a swing width of the axis of the rotor 60 is small, ensuring a reduction of the precession in the rotor 60. Therefore, the rotation speed of the rotor 60 can be increased.

By devising the shape of the separation disk 63, the height of the rotor 60 decreases and an air resistance by the rotor 60 is small. Accordingly, the rotation speed of the rotor 60 can be increased.

The driving oil injected from the injection openings 53a is sprayed to the oil guard 31g. This ensures preventing the injected driving oil from rushing into the drain holes 31c.

The driving oil sprayed to the oil guard 31g flows down along the inner peripheral surface 31f of the oil guard 31g. Since the temperature of the driving oil is as high as 80 to 110°C, the driving oil warms the oil separator 2 from the lower case 21 side. Even the use in a cold area, this ensures reducing operational failures of the oil separator 2 due to freezing or the like. The flowing-down driving oil passes through from the bottom portion in the lower case 21 to communication tube portion 21a, and is returned to the engine 4.

During the rotation of the spindle 52 and the rotor 60, the blow-by gas containing the mist oil passes through the gas introduction pipe 5 from the engine 4, and is supplied to the oil separator 2. The blow-by gas is introduced into the introduction path 41 through the suction pipe 24 and the inlet hole 22b. The blow-by gas passes from the introduction path 41 through the hollow in the fitted portion 32b and the opening 71a of the upper holder 71. Further, the blow-by gas flows into the inside of the disk holding portion 73 (more specifically, the insides of the spoke portions 73b). The blow-by gas flowing into the inside of disk holding portion 73 flows outward through the clearance between the spoke portions 73b, and flows into the clearances between the separation disks 63. The blow-by gas flowing into the clearances between the separation disks 63 flows outward in the radial direction. Then, on the blow-by gas, exerted is the centrifugal force by the rotation of the rotor 60 as well as a pressure from upstream (a gas supply pressure from the engine 4 to the oil separator 2). That is, because of the centrifugal force by the rotation of the rotor 60, a suction pressure is generated to suction the blow-by gas in the introduction path 41 to the inside of the disk holding portion 73. As a result, a flow speed of the blow-by gas increases.

Meanwhile, a part of the oil (separating oil) in the second oil supply passage 52a flows out to the inside of the disk holding portion 73 through a slight clearance between the upper bearing 56 and the inner peripheral surface of the spindle 52 (more specifically, the insides of the spoke portions 73b). The temperature of the separating oil is as high as 80 to 110°C, and therefore the oil warms the rotor 60 and nearby the rotor 60 from the inside. Even the use in a cold area, this ensures reducing operational failures of the oil separator 2 due to freezing or the like.

The separating oil flowing out from the second oil supply passage 52a to the inside of the disk holding portion 73 flows into the clearances between the separation disks 63 together with the blow-by gas. The oil in the clearances between the separation disks 63 spreads to the surfaces of the separation disks 63 due to the centrifugal force. Further, oil films are formed on the surfaces of the separation disks 63. Mainly, the oil films are formed on the top surfaces of the inner peripheral parts 65 and the lower surfaces of the outer peripheral parts 64 of the separation disks 63. The oil films on the surfaces of the separation disks 63 contain not only the separating oil flowing out from the second oil supply passage 52a to the inside of the disk holding portion 73, but also the oil separated from the blow-by gas as described later.

When the blow-by gas flows to the clearances between the separation disks 63, the oil films on the surfaces of the separation disks 63 absorb the oil-like mist contained in the blow-by gas. Thus, the separation disks 63 capture the mist oil in the blow-by gas to separate the mist oil from the blow-by gas. As described above, since the surface area of each separation disk 63 is large and the number of stacked separation disks 63 is also large, the separation disks 63 easily capture the mist oil, thereby featuring the high separation efficiency of oil.

The separating oil flowing out from the second oil supply passage 52a, as well as the oil separated from the blow-by gas, is constituents of the oil films on the surfaces of the separation disks 63. Therefore, the sufficient oil films can be formed on the surfaces of the separation disks 63. Since the oil films absorb the mist oil in the blow-by gas, the separation efficiency of mist oil is high.

The physical property (wettability) of the separating oil flowing out from the second oil supply passage 52a is identical to the physical property (wettability) of the mist oil in the blow-by gas. Therefore, affinity of the separating oil flowing out from the second oil supply passage 52a with the mist oil in the blow-by gas is high, and further, affinity of the mist oil in the blow-by gas with the oil films on the surfaces of the separation disks 63 is high. Accordingly, the mist oil in the blow-by gas is likely to be absorbed into the oil films on the surfaces of the separation disks 63, and the separation efficiency of mist oil is high.

The already-processed blow-by gas from which the oil mist has been removed is discharged from the outer peripheries of the clearances between the separation disks 63 and then moves up in the separation chamber 43. The already-processed blow-by gas that has moved up passes through the communication holes 32c from the separation chamber 43, and flows into the first chamber 42. Further, from the first chamber 42, the blow-by gas passes through the communication hole 22d into the second chamber 45. The blow-by gas passes from the second chamber 45 through the communicating hole 33a of the upper partition wall member 33, through the third chamber 46, through the gas discharge portion 23a, and the blow-by gas is discharged to the breather pipe 3. Thus, the blow-by gas recirculates to the engine 4. When the blow-by gas flows from the communication holes 32c to the inside of the first chamber 42, the flow speed of the blow-by gas decreases inside the first chamber 42. Similarly, the flow speed of the blow-by gas also decreases insides the second chamber 45 and the third chamber 46.

The separation chamber 43 communicates with the oil process chamber 43b only via the clearance 43a. The pressure of the blow-by gas discharged from the clearances between the separation disks 63 acts on the clearance 43a. Therefore, the blow-by gas inside the crankcase of the engine 4 can be prevented from flowing into the separation chamber 43 through a passage such as the communication tube portion 21a, the injection chamber 44, the drain holes 31c, the oil process chamber 43b and the clearance 43a.

When the already-processed blow-by gas passes through the communicating hole 33a of the upper partition wall member 33, the flow rate of the blow-by gas is adjusted. That is, with the excessively large intake air pressure (negative pressure) of the engine 4, the center of the diaphragm 91 moves upward and the opening of the communicating hole 33a narrows, reducing the flow rate of the blow-by gas. Meanwhile, in the case where the pressure on the crankcase side is high, the center of the diaphragm 91 moves downward and the opening of the communicating hole 33a widens, increasing the flow rate of the blow-by gas. This appropriately adjusts the flow rate of the blow-by gas using the diaphragm 91. The engine 4, especially the pressure of the crankcase is appropriately adjusted.

The oil attached to the surfaces of the separation disks 63 and including separating oil flows outward along the surfaces of the separation disks 63 due to the centrifugal force. Especially, at the part where each separation disk 63 is bent, the oil on the outer edge of the top surface of the inner peripheral part 65 jumps due to the centrifugal force to the lower surface of the outer peripheral part 64 of the above-adjacent separation disk 63.

On the outer peripheral edges of the separation disks 63, the oil attached to the surfaces of the separation disks 63 is emitted outside from the outer peripheries of the clearances between the separation disks 63 due to the centrifugal force. More specifically, since the separation disks 63 rotate at a high speed, the emitted oil flies in a direction of a resultant force combining the radially-outward centrifugal force and a tangential rotary inertia force, as viewed from the above. Further, the outer peripheral parts 64 of the separation disks 63 are inclined downward, radially outward. Therefore, when viewed laterally, the emitted oil flies radially outward and obliquely downward. Accordingly, the emitted oil can be prevented from dispersing into the moving-up blow-by gas and turning into the mists. Accordingly, the blow-by gas discharged from the oil separator 2 hardly contains the oil.

This can prevent updraft of the blow-by gas from blowing the flying oil into the communication holes 32c on the middle partition wall member 32. This is because that the communication holes 32c are disposed inside with respect to the outer peripheral edges of the separation disks 63.

The flying oil is attached to the inner peripheral surface of the middle case 22. The oil is captured by the grooves 22h between the plurality of convex portions 22g and 22g on the inner peripheral surface 22f. In the internal space that houses the separation chamber 43, the oil drops downward along the grooves 22h due to capillary action without being affected by the swirl flow E caused by the rotation of the rotor 60. The separated oil can be prevented from forming oil films on the inner peripheral surface 22f of the middle case 22 which houses a separation chamber 43, and the oil can be prevented from being carried away by the swirl flow E.

The guide portions 22i deeper than the grooves 22h are formed on the inner peripheral surface 22f of the middle case 22. The guide portions 22i can move downward a larger amount of oil than the grooves 22h. Accordingly, the guide portions 22i facilitates discharge of the oil from the internal space that houses the separation chamber 43, thereby promoting the reduction of the amount of oil which is captured by the grooves 22h formed on the inner peripheral surface 22f of the middle case 22. Further, the guide portions 22i can effectively prevent formation of oil films on the inner peripheral surface 22f.

The guide portions 22i promote downward movement of the separated oil on the inner peripheral surface 22f, and the guide portions 22i facilitates discharge of the oil from the internal space that houses the separation chamber 43. Accordingly, the guide portions 22i can reduce the amount of oil which is captured by the grooves 22h, and can also effectively prevent formation of oil films on the inner peripheral surface 22f.

Even if a large amount of oil temporarily flows into the internal space that houses the separation chamber 43, the guide portions 22i can allow the oil to continuously move (flow) downward so as to effectively discharge the oil.

Concerning oil which drops (moves downward) on the inner peripheral surface 22f of the middle case 22 and concerning the swirl flow E which is caused by the rotation of the rotor 60, the first partition wall 31b of the lower partition wall member 31 prevents that oil from being carried by that swirl flow E in the clearance 43a. Here, the clearance 43a is located radially outside in the lower portion of the rotor 60, and serves as an escape path of blow-by gas flowing at an ultra-high flow rate. Further, the first partition wall 31b can prevent that oil from staying on the inner peripheral surface 22f of the middle case 22. This enables oil which moves downward and gas which moves in the opposite direction to pass each other without interference. Consequently, the oil can be discharged to the lower case 21 from the separation chamber 43 having the rotor 60, and the oil can be inhibited from being accumulated in the separation chamber 43, thereby preventing submersion-in-oil of the rotor 60.

The ribs 31d can prevent oil radially outside the first partition wall 31b and on the lower partition wall member 31 from being carried by the swirl flow E caused by the rotation of the rotor 60. Further, the ribs 31d make oil radially outside the first partition wall 31b easier to flow into the drain hole 31c. Consequently, the oil can be discharged efficiently toward the flow passage 44a formed in the lower case 21 below the lower partition wall member 31. The reinforcing portion 31e not only reinforces the strength of the lower partition wall member 31, but also inhibits radially outward movement of the oil that has been discharged from the drain hole 31c, facilitating downward movement of the oil.

Further, the oil guard 31g on the lower surface side of the lower partition wall member 31 restricts scattering of oil that has injected by the nozzles 53 to thereby prevent submersion-in-oil of the drain hole 31c through which the oil is discharged from the separation chamber 43 to the lower case 21. The oil guard 31g may have a polygonal tube shape or a cylindrical shape, and at least either of convex portions and concave portions may be formed extending vertically on the inner peripheral surface 31f of the oil guard 31g. In this case, concerning oil which is blown against the inner peripheral surface 31f of the oil guard 31g while being swirled accompanying with the rotation of the spindle 52, the oil can be prevented from rotating horizontally by centrifugal force, making the oil easier to move downward. As long as the oil guard 31g has a polygonal tube shape, the oil guard 31g does not necessarily need to form the convex portions or concave portions.

The vent opening 21d is provided radially outside the oil guard 31g, that is, outside the locus of the oil discharged from the nozzles 53. This makes movement of gas easier, and facilitates discharge of the oil. Accordingly, it is possible to improve discharge performance of the oil from inside the middle case 22 (the separation chamber 43). At the time of discharging the separated oil from the separation chamber 43 through the lower case 21 through the communication tube portion 22a which serves as the lowest discharge opening, the oil of a certain volume can be prevented from moving to avoid negative pressure inside the lower case 21. Consequently, discharge performance of the oil can be improved. The oil guard 31g restricts scattering of oil that has injected by the nozzles 53 to prevent submersion-in-oil of the drain hole 31c through which oil is discharged from the separation chamber 43 to the lower case 21. Therefore the oil can be effectively discharged through the drain hole 31c toward the lower case 21 below the lower partition wall member 31.

The separated oil flows from the separation chamber 43 through the drain hole 31c into the flow passage 44a in the lower case 21. The oil moves downward in the flow passage 44a, passes through the vent opening 21d, and is discharged from the communication tube portion 21a.

In this case, a through hole penetrating the lower holder 72 in the up-down direction is only the opening 72a through which the spindle 52 is inserted to thereby eliminate a communication hole disposed in the rotor 60 on the center side of the lower holder 72. Accordingly, the processing-target gas can be prevented from leaking downward from inside the inner peripheral edge of the lower holder 72. In addition, even if lampblack produced at high temperatures is sucked, large drops of mist which do not present at low temperatures are not sucked, thereby preventing the separation efficiency from decreasing.

A clearance 43a is formed between the outer peripheral edge of the flange 72d of the lower holder 72 and the inner peripheral surface 22f of the middle case 22. Between the inner peripheral surface 22f of the middle case 22 and the partition wall 72c, the first partition wall 31b of the lower partition wall member 31 is arranged. The flange 72d is located away above the top surface of the lower partition wall member 31. An oil process chamber 43b is formed below the flange 72d. The oil process chamber 43b and the separation chamber 43 are communicated through the clearance 43a. The drain hole 31c extends vertically through the lower partition wall member 31 inside the oil process chamber 43b. Accordingly, the pressure inside the oil process chamber 43b is lower than the pressure inside the separation chamber 43. Further, a difference between the pressure inside the oil process chamber 43b and the pressure inside the injection chamber 44 is small. Therefore, the oil above the lower partition wall member 31 continuously flows into the drain hole 31c and a backflow of the oil hardly occurs.

Even if a part of the oil attached to the inner peripheral surface 22f of the middle case 22 is pushed upward by the updraft of the blow-by gas, the attached oil is suppressed from getting into the communication holes 32c because the communication holes 32c on the middle partition wall member 32 are disposed inside with respect to the inner peripheral surface of the middle case 22.

Even supposing that the oil pushed up by the updraft of the blow-by gas inside the separation chamber 43 flows in the communication holes 32c on the middle partition wall member 32, the oil remains in the first chamber 42. Especially, since the flow speed of the blow-by gas decreases inside the first chamber 42, the oil is likely to remain inside the first chamber 42. For example, the oil is attached to the inner wall surface of the first chamber 42 and remains inside the first chamber 42. Therefore, the oil can be prevented from attaching to the PCV valve 90, and the blow-by gas discharged from the oil separator 2 hardly contains the oil.

The second chamber 45 and the third chamber 46 are disposed in the middle of the path from the first chamber 42 to the gas discharge portion 23a. The second chamber 45 and the third chamber 46 become a space for oil to remain like the first chamber 42. Therefore, the blow-by gas discharged from the oil separator 2 hardly contains the oil.

For example, when the blow-by gas flowing at an ultra-high flow rate is produced and a large amount of oil temporarily flows into the oil separator 2, which handles usually a small amount of oil, the blow-by gas inside the crankcase of the engine 4 passes through the inside of the communication tube portion 21a, and further flows into the inside of the injection chamber 44. The mist oil contained in the blow-by gas collides with the oil injected from the nozzles 53 and is captured. Accordingly, the mist oil is separated from the blow-by gas.

At this stage, the blow-by gas in the injection chamber 44 flows into the separation chamber 43 through the drain hole 31c of the lower partition wall member 31. Thus, substantially the same amount of blow-by gas as that of the discharged oil flows into the separation chamber 43. In this case, at the time of discharging the separated oil from the separation chamber 43 through the lower case 21 through the lowest discharge opening (the communication tube portion 21a), the oil of a certain volume can be prevented from moving to avoid negative pressure inside the middle case 22. Consequently, it is possible to improve discharge performance of oil.

In an abnormal case (for example, when the gas introduction pipe 5 freezes), the flow rate of the blow-by gas flowing from the introduction path 41 to the center-side space 62 decreases. Even in such a case, regarding the blow-by gas passing from the engine 4 through the communication tube portion 21a through the injection chamber 44 through the pressure control holes 72b and flowing into the center-side space 62, the flow rate thereof increases. Therefore, even in an abnormal case, the oil-like mist is continuously separated from the blow-by gas.

The description of the above-described embodiments is for ease of understanding of the present invention and does not limit the present invention. The present invention may be modified or improved without departing from the gist and includes the equivalents. The following describes points changed from the above-described embodiments. The respective changes described below may be applied in combination.

The above-described embodiments describe the blow-by gas as the processing-target gas as the example. However, as long as the gas contains the mist oil to be the target for separation, the gas can be the processing-target gas.

The above-described embodiments describe the example where the inner peripheral part 65 and the outer peripheral part 64 of each separation disk 63 forms the surface of the frustum of a hypothetical circular cone. Meanwhile, the inner peripheral part 65 and the outer peripheral part 64 may form the surface of a different type of frustum. For example, the separation disk 63 may be a body having a rotational symmetry around the axis of the spindle 52, and the inner peripheral part 65 and the outer peripheral part 64 may form the surface of the frustum of a hypothetical polygonal pyramid (for example, triangular pyramid, quadrangular pyramid, or the like) . The generator (s) of the inner peripheral part 65 and/or the outer peripheral part 64 may not be a straight line, but may be a curved line with a predetermined curvature (for example, an arc, an elliptic curve, a parabolic curve, and a hyperbolic curve).

Further, the separation disk 63 may form the surface of any type of frustum without bending.

The above-described embodiments describe that the rotational powers from the rotor 60 and the spindle 52 is generated by utilizing the hydraulic pressure of the oil supplied from the engine 4. On the other hand, the power from the engine 4 may be transmitted to the rotor 60 and the spindle 52 by a power transmission mechanism (such as a belt transmission mechanism, a gear transmission mechanism, and a chain transmission mechanism) to rotate the rotor 60 and the spindle 52. Further, a power source independent from the engine 4 (for example, an electric motor) may rotate the rotor 60 and the spindle 52.

The above-described embodiments describe that the oil separator 2 is mounted to the side surface of the engine 4 (see FIG. 1); however, the part where the oil separator 2 is mounted is not limited to the side surface of the engine 4. For example, the oil separator 2 may be mounted to the front surface, the rear surface, the top surface, or the lower surface of the engine 4. Further, the oil separator 2 may be mounted not to the engine 4 but to a vehicle body (especially, an engine compartment). As necessary, an oil flow pipe plumbed from the communication tube portion 21a to the engine 4 may be installed.

The above-described embodiments describe that the ventilation system 1 is a closed system where the blow-by gas processed by the oil separator 2 passes through the breather pipe 3 and is restored to the intake-side flow passage 6. In contrast to this, the ventilation system 1 may be an atmosphere-open system where the blow-by gas processed by the oil separator 2 is discharged to the atmosphere. The ventilation system 1 of the atmosphere-open system may include the PCV valve 90 as described above or may not include the PCV valve 90.

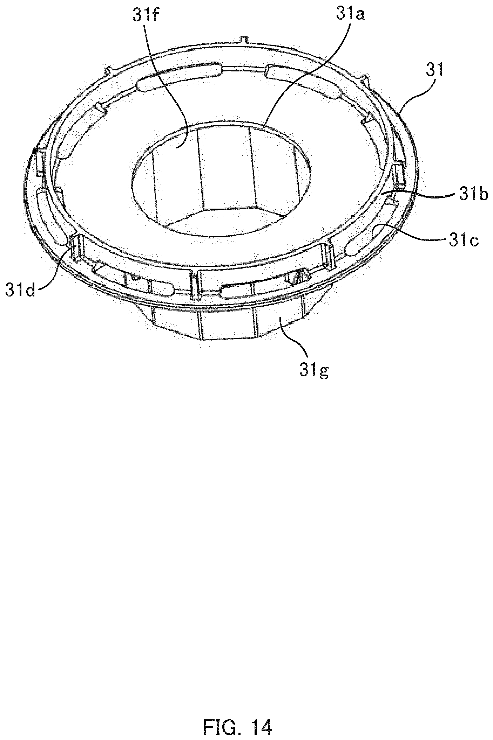

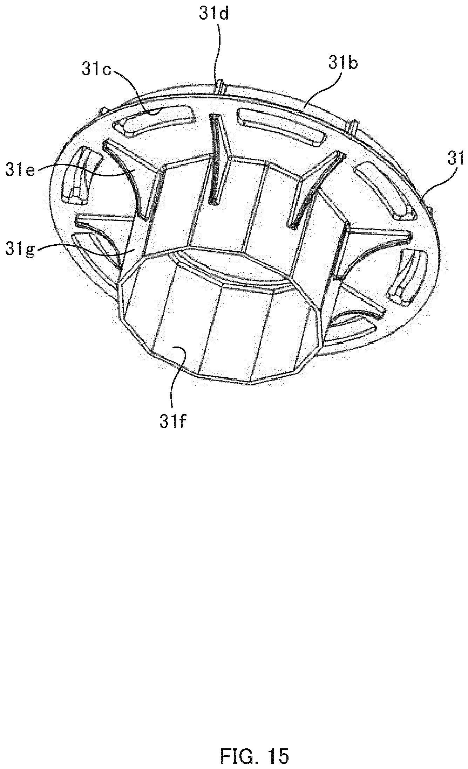

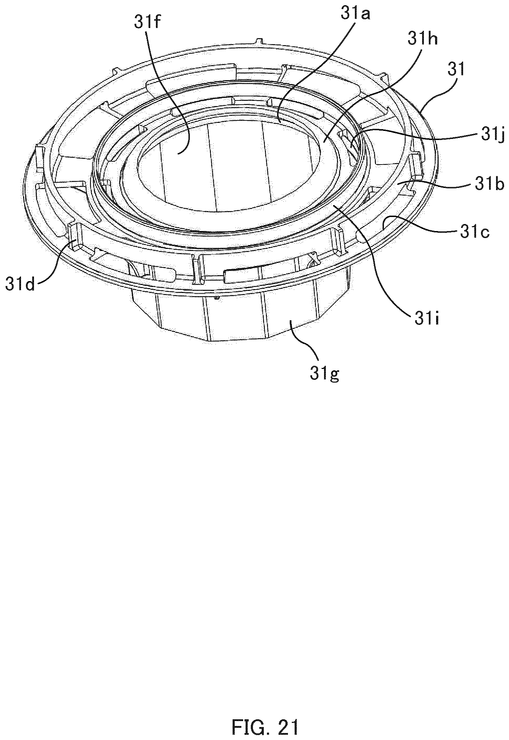

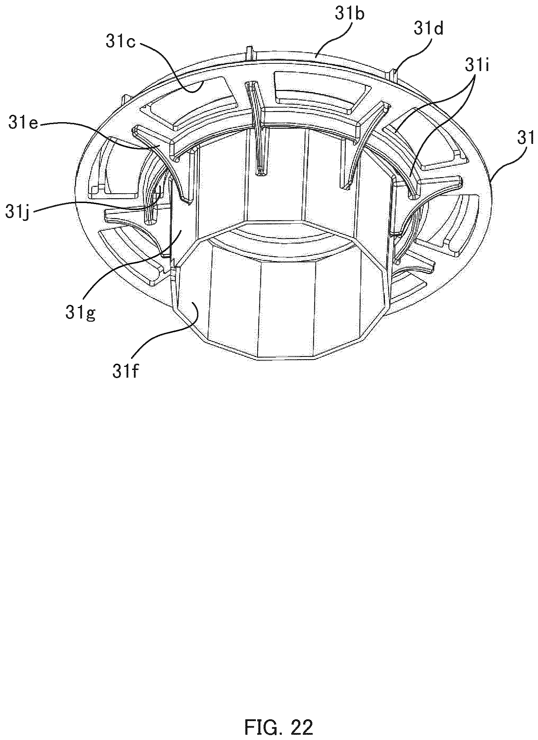

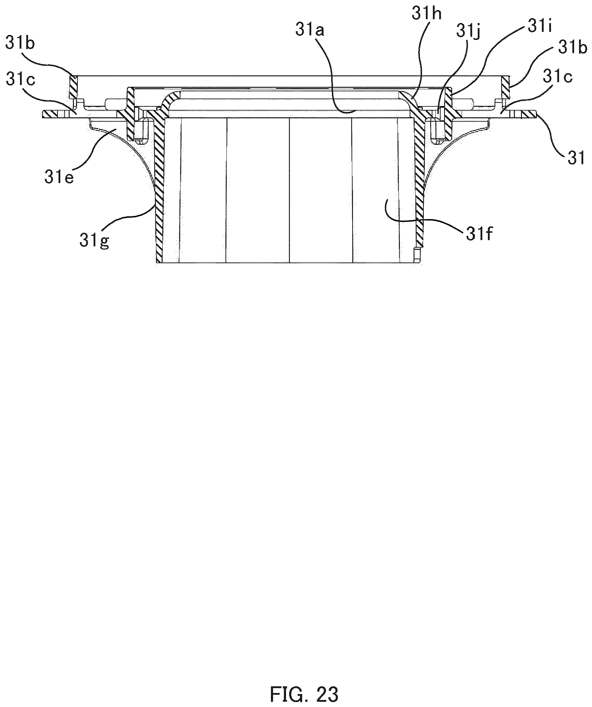

The configuration of the lower partition wall member 31 is not limited to the foregoing embodiment. For example, as shown in FIGS. 21, 22 and 23 in which elements corresponding to FIGS. 14 and 15 have reference signs identical thereto, the drain hole 31c may enlarge inside (to the through hole 31a side) . Further, concerning oil which is blown against the inner peripheral surface 31f of the oil guard 31g while being swirled accompanying with the rotation of the spindle 52, a guide portion 31h having a bow-shaped cross section may be provided around the through hole 31a so as to prevent that oil from moving upward on the inner peripheral surface 31f. In addition, concerning oil which has moved beyond the guide 31h, a wall portion 31i for preventing that oil from moving radially outward with respect to the lower partition wall member 31 may be provided between the guide 31h and the drain hole 31c. A hole 31j for discharging the oil below toward the flow passage 44a may be provided between the guide 31h and the wall portion 31i. In this case, if the wall portion 31i is provided perpendicularly, extending through the lower partition wall member 31, it is possible to efficiently guide toward the flow passage 44a the oil discharged from the hole 31j.

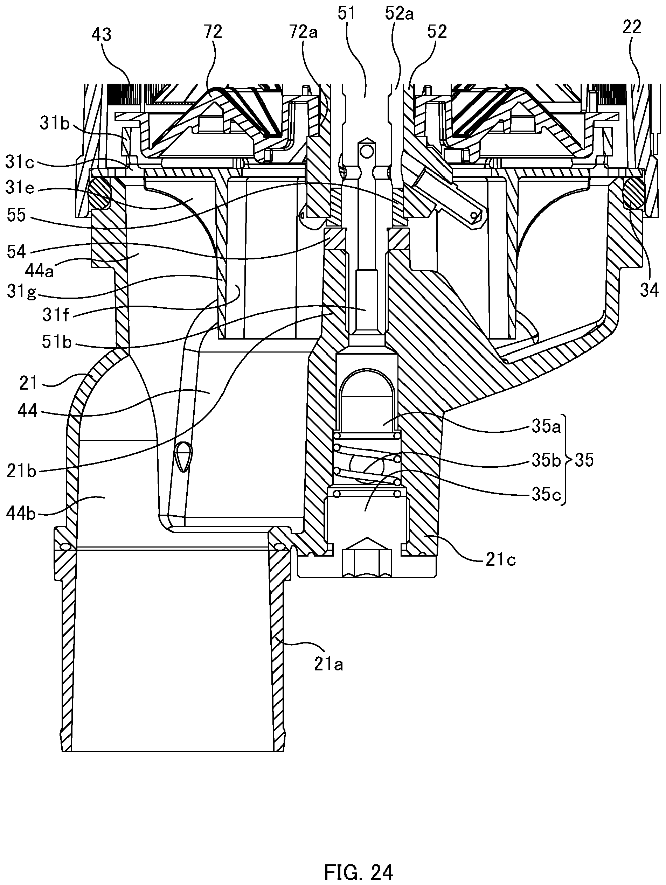

The configuration of lower case 21 is not limited to the foregoing embodiment. For example, as shown in FIG. 24 in which elements corresponding to FIG. 8 have reference signs identical thereto, the following configuration is also acceptable: the diameter of the communication tube portion 21a is enlarged; a portion of the lower case 21 to which the communication tube portion 21a is connected has a shape which expands outwardly beyond the drain hole 31c; and inside that portion, the vent opening 21d is replaced with an enhanced flow passage 44b which is for facilitating discharge of the separated oil, and the enhanced flow passage 44b is provided radially outside the oil guard 31g. The enhanced flow passage 44b communicates with the flow passage 44a which is separated from the injection chamber 44 by the oil guard 31g in the lower case 21. In this configuration, the diameter of the communication tube portion 21a is enlarged and the enhanced flow passage 44b is provided inside. With such a configuration, even without the vent opening 21d, the gas (blow-by gas) which moves upward and oil which is to be drained are easier to pass each other without crashing to thereby improve discharge performance. However, it is essential to ensure a sufficient space around the oil separator 2. If ensuring such a space is difficult and the diameter of the communication tube portion 21a is not sufficiently large, it should be appreciated that a configuration with the foregoing vent opening 21d is effective.

### [Reference Signs List]

1 closed crankcase ventilation system, 2 oil separator, 20 housing, 21 lower case, 21a communication tube portion, 21d vent opening, 22 middle case (case), 22b inlet hole, 22f inner wall surface, 22g convex portion, 22h groove, 22i guide portion, 23 upper case, 23a gas discharge portion, 24 suction pipe, 31 lower partition wall member, 31a through hole, 31b first partition wall, 31c drain hole, 31d rib, 31e reinforcing portion, 31f inner peripheral surface, 31g oil guard (second partition wall), 31h guide, 31i wall portion, 31j hole , 32 middle partition wall member, 32b fitted portion, 32c communication hole, 33 upper partition wall member, 33a communicate hole, 35 strainer, 35a mesh filter, 35b spring, 35c plug, 41 space (introduction path), 42 space (first chamber), 43 space (separation chamber), 43a clearance, 43b oil process chamber, 44 hollow (injection chamber), 44a flow passage, 44b enhanced flow passage, 45 hollow (second chamber), 46 hollow (third chamber), 50 rotor unit, 51 spindle shaft, 51b first oil supply passage, 52 spindle, 52a second oil supply passage, 53 nozzle, 53a injection opening, 54 bearing, 55 lower bearing, 56 upper bearing, 60 rotor, 61 separation disk group, 62 center-side space, 63 separation disk, 63a rib, 64 outer peripheral part of separation disk, 65 inner peripheral part of separation disk, 66 mounting opening, 71 upper holder, 71a opening, 72 lower holder, 72a opening, 72c partition wall, 72d flange, 73 disk holding portion, 73a hub portion, 73b spoke portion, 85 magnetic sensor, 86 permanent magnet, 87 seal, 90 PCV valve, 91 diaphragm, 92 upper spring, 93 lower spring

## Claims

1. An oil separator, comprising:
a rotor having an inner peripheral space and configured to be rotated by introducing, into the inner peripheral space, oil for separation and processing-target gas containing mist oil so that the mist oil is separated from the processing-target gas; and
a case having an internal space and an inlet hole communicating with the internal space, the internal space housing a separation chamber having the rotor, the case including a plurality of convex portions on an inner wall surface which constitutes the internal space, the plurality of convex portions arranged adjacently in a direction along the inner wall surface, and extending in an up-down direction.

2. The oil separator according to claim 1, wherein the case further includes a guide portion extending on the inner wall surface in the up-down direction, and
the guide portion guides, downward in the internal space, oil which has been separated by rotation of the rotor.

3. The oil separator according to claim 2, wherein the case includes:
a first groove constituted by the plurality of convex portions formed on the inner wall surface; and
a second groove constituted by the guide portion formed on the inner wall surface, and formed deeper than the first groove.

4. The oil separator according to any one of claims 1 to 3, wherein the the plurality of convex portions are formed in a portion of the inner wall surface other than a lower end portion of the inner wall surface in the up-down direction.
